# EUROPEAN PATENT SPECIFICATION

(11) **EP 3 636 978 B1**
(45) Date of publication and mention of the grant of the patent: **26.06.2024**
(21) Application number: 18797786.3
(22) Date of filing: 20.03.2018
(51) Int. Cl.: F16L 59/065, B32B 27/00, F16L 59/02, B32B 7/022, B32B 7/12, B32B 15/08, B32B 15/09, B32B 15/20, B32B 27/08, B32B 27/30, B32B 27/32, B32B 27/34, B32B 27/36

(54) **OUTER COVERING MATERIAL FOR VACUUM HEAT INSULATION MATERIALS, VACUUM HEAT INSULATION MATERIAL, AND ARTICLE WITH VACUUM HEAT INSULATION MATERIAL**
DECKSCHICHTMATERIAL FÜR VAKUUMWÄRMEDÄMMUNGSMATERIALIEN, VAKUUMWÄRMEDÄMMUNGSMATERIAL UND ARTIKEL MIT VAKUUMWÄRMEDÄMMUNGSMATERIAL
MATÉRIAU DE REVÊTEMENT EXTERNE POUR MATÉRIAUX D'ISOLATION THERMIQUE SOUS VIDE, MATÉRIAU D'ISOLATION THERMIQUE SOUS VIDE ET ARTICLE DOTÉ DUDIT MATÉRIAU D'ISOLATION THERMIQUE SOUS VIDE

(30) Priority: 09.05.2017 JP 2017093327
(43) Date of publication of application: 15.04.2020
(73) Proprietor: Dai Nippon Printing Co., Ltd., Tokyo 162-8001 (JP)
(72) Inventor: MUNEDA, Taku, Tokyo 162-8001 (JP); IMAI, Masahiro, Tokyo 162-8001 (JP); MIZOSHIRI, Makoto, Tokyo 162-8001 (JP)
(74) Representative: Beck Greener LLP
(86) International application number: PCT/JP2018/010956
(87) International publication number: WO 2018/207470

(56) References cited:
- EP-A1- 3 421 860
- JP-A- 2007 040 391
- JP-A- 2007 327 619
- JP-A- 2011 226 644
- JP-A- 2016 117 201
- US-A1- 2016 230 918

## Description

### Technical Field

The present disclosure is related to materials such as an outer covering material used for a vacuum heat insulation material.

### Background Art

In recent years, vacuum heat insulation materials have been used for the purpose of energy conservation of articles. A vacuum heat insulation material is a material in which a core is arranged inside the bag body of an outer covering material, and inside the bag body is kept in a vacuum state of which pressure is lower than the atmospheric pressure; thus, heat convection inside is suppressed to exhibit an excellent heat insulation performance. Incidentally, the outer covering material used for the vacuum heat insulation material is referred to as an outer covering material for vacuum heat insulation material, or simply the outer covering material while explained.

Outer covering materials for vacuum heat insulation material require gas barrier properties of preventing gas such as oxygen and water vapor from permeating, in order to keep the vacuum state inside the vacuum heat insulation material for a long period of time. For this reason, it has been publicly known that the outer covering material includes a gas barrier layer formed of an inorganic material such as a metal and an inorganic compound as its structural member (for example, Patent Document 1). In addition, Patent Document 2 discloses an outer packaging material for a vacuum heat insulation material having four resin layers and four gas barrier layers.

### Citation List

### Patent Document

Patent Document 1: Japanese Patent Application Laid-Open (JP-A) No. 2011-226644
Patent Document 2: JP 2007 327619 A

### Summary

### Technical Problem

When a vacuum heat insulation material is used in an environment having a high temperature and a high humidity, the outer covering material is required to exhibit excellent gas barrier properties for a long period of time even when it is exposed to such an environment.

The present disclosure has been made in view of the above circumstances, and a main object thereof is to provide materials such as an outer covering material for vacuum heat insulation material in which the heat insulation performance of the vacuum heat insulation material can be maintained for a long period of time in an environment having a high temperature and a high humidity.

### Solution to Problem

The above object has been achieved by the outer covering material for vacuum heat insulation material, the vacuum heat insulation material as well as the article provided with vacuum heat insulation material as defined in the appended claims.

The present disclosure provides an outer covering material for vacuum heat insulation material characterized by comprising: at least four resin layers, namely, a first resin layer, a second resin layer, a third resin layer, and a fourth resin layer, and at least three gas barrier layers, and wherein: the first resin layer is a thermally weldable film; at least one or more of the gas barrier layers are arranged between the second resin layer and the third resin layer; at least one or more of the gas barrier layers are arranged between the third resin layer and the fourth resin layer; a tensile storage elastic modulus in an atmosphere having a temperature of 70°C and a humidity of 90%RH is within the range of 1.0 * 10⁹ Pa or more and 1.5 * 10⁹ Pa or less; an indentation elastic modulus of the second resin layer is not less than an indentation elastic modulus of the first resin layer; an indentation elastic modulus of the third resin layer is not less than the indentation elastic modulus of the second resin layer; and an indentation elastic modulus of the fourth resin layer is not less than the indentation elastic modulus of the third resin layer.

Also, the present disclosure provides a vacuum heat insulation material characterized by comprising: a core material, and an outer covering material for vacuum heat insulation material enclosing the core material; wherein the outer covering material for vacuum heat insulation material is the above described outer covering material for vacuum heat insulation material.

Also, the present disclosure provides an article provided with vacuum heat insulation material characterized by comprising: an article including a thermal insulation region, and a vacuum heat insulation material; wherein the vacuum heat insulation material includes a core material, and an outer covering material for vacuum heat insulation material enclosing the core material; and the outer covering material for vacuum heat insulation material is the above described outer covering material for vacuum heat insulation material.

### Advantageous Effects

The present disclosure exhibits an effect of providing an outer covering material for vacuum heat insulation material in which heat insulation performanced of the vacuum heat insulation material can be maintained for a long period of time in an environment having a high temperature and a high humidity.

### Brief Description of Drawings

FIG. 1 is a schematic cross-sectional view illustrating an example of the outer covering material for vacuum heat insulation material of the present disclosure.
FIGS. 2A and 2B are schematic perspective view and cross-sectional view illustrating an example of the vacuum heat insulation material of the present disclosure.
FIG. 3 is a graph showing chronological change in temperature and humidity for measuring a tensile storage elastic modulus.
FIG. 4 is an explanatory view explaining a method for collecting measurement samples.
FIG. 5 is an explanatory view showing an example of an infrared ray absorption spectrum in a layer containing a M-O-P bond.
FIGS. 6A and 6B are schematic cross-sectional views illustrating an additional example of the outer covering material for vacuum heat insulation material of the present disclosure.
FIGS. 7A and 7B are schematic cross-sectional views illustrating an additional example of the outer covering material for vacuum heat insulation material of the present disclosure.

### Description of Embodiments

The present disclosure includes an outer covering material for vacuum heat insulation material, a vacuum heat insulation material, and an article provided with the vacuum heat insulation material as its embodiments. Embodiments of the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the invention such as width, thickness, and shape of each part schematically comparing to the actual form in order to explain the invention more clearly in some cases; however, it is merely an example, and thus does not limit the interpretation of the present disclosure. Also, in the present description and each drawing, for the factor same as that described in the figure already explained, the same reference sign is indicated and the explanation thereof may be omitted. In addition, for the convenience of explanation, explanation may be made using the terms upward or downward in some cases, but the direction of up and down may be reversed.

Also, in the present descriptions, when some structure in some member or some region and the like is described to be "on (or below)" the other structure in other member or the other region and the like, unless otherwise stated, it is not just the case of being directly on (or directly below) the other structure, but the case of being upward (or downward) the other structure is also included; it means it also includes the case an additional structural element is included in between the upward (or downward) the other structure.

### I. Outer covering material for vacuum heat insulation material

The outer covering material for vacuum heat insulation material of the present disclosure is an outer covering material for vacuum heat insulation material characterized by comprising: at least four resin layers, namely, a first resin layer, a second resin layer, a third resin layer, and a fourth resin layer, and at least three gas barrier layers, and wherein: the first resin layer is a thermally weldable film; at least one or more of the gas barrier layers are arranged between the second resin layer and the third resin layer; at least one or more of the gas barrier layers are arranged between the third resin layer and the fourth resin layer; a tensile storage elastic modulus in an atmosphere having a temperature of 70°C and a humidity of 90%RH is within the range of 1.0 * 10⁹ Pa or more and 1.5 * 10⁹ Pa or less; an indentation elastic modulus of the second resin layer is not less than an indentation elastic modulus of the first resin layer; an indentation elastic modulus of the third resin layer is not less than the indentation elastic modulus of the second resin layer; and an indentation elastic modulus of the fourth resin layer is not less than the indentation elastic modulus of the third resin layer.

In the present disclosure, the tensile storage elastic modulus in the atmosphere having the temperature of 70°C and the humidity of 90%RH may be referred to as a tensile storage elastic modulus in an atmosphere having a high temperature and a high humidity in some cases. Also, in the present disclosure, "gas barrier properties" or "gas barrier performance" signifies a performance of preventing gas and/or water vapor such as oxygen from permeating unless otherwise described.

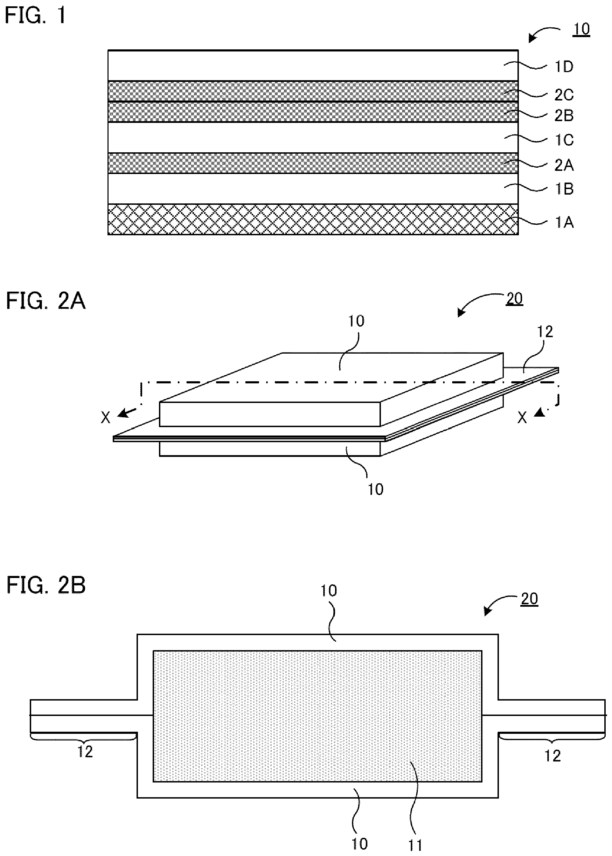

FIG. 1 is a schematic cross-sectional view illustrating an example of the outer covering material of the present disclosure. Outer covering material 10 of the present disclosure comprises at least four resin layers 1, namely, first resin layer 1A, second resin layer 1B, third resin layer 1C, and fourth resin layer 1D, and at least three gas barrier layers 2A to 2C, and wherein: the first resin layer 1A is a thermally weldable film; at least one or more of the gas barrier layers 2A are arranged between the second resin layer 1B and the third resin layer 1C; and two gas barrier layers 2B and 2C are respectively arranged between the third resin layer 1C and the fourth resin layer 1D. The tensile storage elastic modulus of the outer covering material of the present disclosure in the atmosphere having a high temperature and a high humidity is within the specific range. Also, an indentation elastic modulus of the second resin layer 1B is not less than an indentation elastic modulus of the first resin layer 1A; an indentation elastic modulus of the third resin layer 1C is not less than the indentation elastic modulus of the second resin layer 1B; and an indentation elastic modulus of the fourth resin layer 1D is not less than the indentation elastic modulus of the third resin layer 1C.

FIGS. 2A and 2B are schematic perspective view and cross-sectional view of X-X line, illustrating an example of the vacuum heat insulation material using the outer covering material of the present disclosure. Vacuum heat insulation material 20 comprises core material 11, and outer covering material 10 enclosing the core material 11. In the vacuum heat insulation material 20, the outer covering material 10 is a bag body of which thermally weldable films in the outer covering material 10 are bonded to each other in end part 12, the core material 11 is arranged in the bag body, and the pressure therein is kept in a vacuum state which is lower than the atmospheric pressure. Incidentally, reference signs not described in FIGS. 2A and 2B signify the same members as in FIG. 1; thus, the descriptions herein are omitted.

The outer covering material of the present disclosure is provided with a first characteristic that the tensile storage elastic modulus in the atmosphere having a high temperature and a high humidity is within the specific range, and a second characteristic that the indentation elastic modulus of each of the resin layer: the first resin layer, the second resin layer, the third resin layer, and the fourth resin layer, has the specific magnitude correlation; thus, a vacuum heat insulation material capable of maintaining the heat insulation performance for a long period of time in the environment having a high temperature and a high humidity may be formed. Specific effects of the outer covering material of the present disclosure to be exhibited with the above described two characteristics are hereinafter explained.

Regarding the outer covering material in the vacuum heat insulation material, the inside pressure of the vacuum heat insulation material is lower than the atmospheric pressure, and the end part are bonded to be fixed; thus, it is in a state a certain stress is applied in the inner surface direction. Also, in the vacuum heat insulation material, the outer covering material is bent to follow the shape of the core material, and furthermore, the end part of the outer covering material may be bent in some cases during the usage of the vacuum heat insulation material. In the case described above, the outer covering material is bent in the size of a constant strain, and tensile stress works at the outer surface side of bend in the bent part, while compression stress works at the inner surface side of the bend. Then, shearing stress is applied respectively to between each layers of the outer covering material at the bent part.

Here, when the outer covering material is exposed to the environment having a high temperature and a high humidity, the glass transition point (Tg) of the resin layer configured in the outer covering material is dropped; as the result, the tensile storage elastic modulus overall tends to be smaller. When the tensile storage elastic modulus of the outer covering material in the atmosphere having a high temperature and a high humidity is small, the resin layer becomes soft and easily stretched to a surface direction in a state a certain amount of stress is applied; thus, the strain increases. At this time, it is assumed that the strain to the surface side increases also in the gas barrier layer that contacts with the resin layer. In other words, when the tensile storage elastic modulus of the outer covering material overall is too small, the strain in the gas barrier layer grows too large; as the result, it is presumed that the defects such as cracks in the gas barrier layer is easily generated.

On the other hand, when the tensile storage elastic modulus of the outer covering material in the atmosphere having a high temperature and a high humidity is too large, the outer covering material is stiff and it is difficult to bend; thus, in order to keep the bent state with a certain amount of strain in such an atmosphere, it is assumed that the compression stress and the tensile stress to be generated at the inner surface and the outer surface of the bend in the bent part increases. Then, when the vacuum heat insulation material is used in the environment having a high temperature and a high humidity for a long period of time, in the bent part of the outer covering material, it is presumed that the shearing stress to be applied to between each layers increases when excessive stress is applied to the inner surface and the outer surface of the bend for a long time. Because of this, in the outer covering material, the gas barrier layers arranged in between adjacent resin layers break when the shearing stress is applied, which presumably results in easily causing defects.

In this manner, when the vacuum heat insulation material is used in the environment having a high temperature and a high humidity for a long period of time, from the above mentioned reasons, defects are easily caused in the inner surface and at the bend part of the outer covering material in the vacuum heat insulation material, and thus gas permeated from the defects ruins the vacuum state inside the vacuum heat insulation material; as the result, the thermal insulation performance is degraded in early stage and thereby it is presumed that maintaining the performance for a long period of time becomes difficult.

To solve the problem, the outer covering material of the present disclosure has the first characteristic, and thus the both faults: generation of defects in the gas barrier layer due to the strain to the inner surface direction, and generation of defects in the gas barrier layer due to the shearing stress applied at the bent part, can be prevented to allow the gas barrier properties to be exhibited in the environment having a high temperature and a high humidity for a long period of time. Then, gas cannot be easily permeated from outside to the vacuum heat insulation material using the outer covering material of the present disclosure, which allows the vacuum state inside to be maintained for a long period of time, and thus it is possible to maintain the heat insulation performance in the environment having a high temperature and a high humidity for a long period of time.

Also, the mechanical characteristics of each resin layer configured in the outer covering material vary with the kind of resins; thus, strains in the interface between two adjacent resin layers (also referred to as the interface between the resin layers in some cases) are different. Because of this, in the outer covering material including four or more of the resin layers and multiple interfaces between the resin layers, when the interfaces between the resin layers having large strain are locally present, it is presumed that defects such as cracks are easily generated in the gas barrier layer arranged at the interface between the resin layers locally having large strain as it receives the stress of strain in each of the resin layer that holds the gas barrier layer. Meanwhile, at the bent part of the outer covering material, the intensity of the stress applied due to the bend is different in the inner surface side of the bend from the outer surface side of the bend. In the outer covering material including multiple interfaces between the resin layers, when the interfaces between the resin layers having large shearing stress are locally present, it is presumed that defects such as cracks are easily generated in the barrier layer arranged at the interface between the resin layers locally having large shearing stress as it receives the shearing stress between layers.

In response to this, the outer covering material of the present disclosure has the second characteristic, and thus the strains in the interfaces between each resin layers may be intended to be balanced to presumably prevent the generation of large strain locally in the specific interface between resin layers. Also, in the bent part, it is presumed that the interlayer shearing stress in the interface between each resin layers may be intended to be balanced. Thereby, generation of defects in the gas barrier layers arranged respectively between the second resin layer and the third resin layer, and between the third resin layer and the fourth resin layer, caused by receiving the strain in the interfaces between each layers and the interlayer shearing stress may be inhibited.

Also, the thermally weldable layer (the first resin layer) is required to have a relatively low melting point, although mechanical strength such as the elasticity also tends to be relatively low in general. On the other hand, a purpose of the outside of the outer covering material (the fourth resin layer side) is to protect the outer covering material and the vacuum heat insulation material from the external stimulus, and thus a resin with high mechanical strength is preferred and used. In view of these circumstances, the second characteristic is necessary in order to inhibit the generation of defects in the gas barrier layer due to the bend.

The characteristics and the constitution of the outer covering material in the present disclosure are hereinafter explained.

### A. Characteristics

The outer covering material of the present disclosure is provided with at least: a first characteristic that the tensile storage elastic modulus in the atmosphere having a high temperature and a high humidity is within the specific range; and a second characteristic that the indentation elastic modulus of each of the resin layer: the first resin layer, the second resin layer, the third resin layer, and the fourth resin layer, has the specific magnitude correlation.

### 1. First characteristic

Regarding the outer covering material of the present disclosure, a tensile storage elastic modulus in an atmosphere having a temperature of 70°C and a humidity of 90%RH is within the range of 1.0 * 10⁹ Pa or more and 1.5 * 10⁹ Pa or less. Here, the first characteristic: the tensile storage elastic modulus, signifies a storage elastic modulus measured by a tensile method using a dynamic viscoelasticity measurement device.

In specific, in the present disclosure, the tensile storage elastic modulus of the outer covering material in the atmosphere having a high temperature and a high humidity may be, 1.0 * 10⁹ or more, and above all, is preferably 1.1 * 10⁹ or more, and particularly preferably 1.2 * 10⁹ or more. Also, in the present disclosure, the tensile storage elastic modulus of the outer covering material in the atmosphere having a high temperature and a high humidity may be, 1.5 * 10⁹ or less, and above all, is preferably 1.4 * 10⁹ or less. The reason therefor is that the tensile storage elastic modulus in the atmosphere having a high temperature and a high humidity being in the above range allows the outer covering material of the present disclosure to inhibit the deterioration of the gas barrier properties due to the usage in the environment having a high temperature and a high humidity.

The tensile storage elastic modulus in the atmosphere having a high temperature and a high humidity is a value measured in an atmosphere having a temperature of 70°C and a humidity of 90%RH, which is a value stably obtained. In particular, the value is preferably measured by carrying out a series of steps: a step of keeping the outer covering material in an atmosphere having a temperature of 30°C and a humidity of 30%RH for 15 minutes; a step of raising the temperature to 70°C at a constant humidity with the temperature raising speed of 5°C/minute; a step of keeping the outer covering material in an atmosphere having a temperature of 70°C and a humidity of 30%RH for 10 minutes; and a step of raising the humidity to 90%RH at a constant temperature with the humidity raising speed of 5%Rh/minute, in this order, and then keeping the outer covering material in an atmosphere having a temperature of 70°C and a humidity of 90%RH for 10 minutes and measuring the value of the outer covering material. In this manner, by measuring the tensile storage elastic modulus in the atmosphere having a high temperature and a high humidity after placing the outer covering material in the above described series of steps, the temperature history and humidity history of every measurement samples become uniform, the measured values can be stabilized, and the measurement errors of the tensile storage elastic modulus among measurement samples can be reduced.

Regarding the outer covering material of the present disclosure, the tensile storage elastic modulus in an atmosphere having a temperature of 30°C and a humidity of 30%RH (it may be referred to as the initial tensile storage elastic modulus in some cases) is preferably 1.0 * 10⁹ Pa or more, and above all, preferably 1.5 * 10⁹ Pa or more, and particularly preferably 2.0 * 10⁹ Pa or more. Also, regarding the outer covering material of the present disclosure, the initial tensile storage elastic modulus is preferably 5.0 * 10⁹ Pa or less, and above all, preferably 3.5 * 10⁹ Pa or less, and particularly preferably 3.0 * 10⁹ Pa or less.

The initial tensile storage elastic modulus is a value measured in the atmosphere having a temperature of 30°C and a humidity of 30%RH, which is a value stably obtained. In particular, the value is preferably the one measured regarding the outer covering material after being kept in the atmosphere having a temperature of 30°C and a humidity of 30%RH for 15 minutes, which is before the step of raising the temperature when the outer covering material is placed in the above described series of steps.

Regarding the outer covering material of the present disclosure, a ratio of the tensile storage elastic modulus in the atmosphere having a temperature of 70°C and a humidity of 90%RH with respect to the tensile storage elastic modulus in the atmosphere having a temperature of 30°C and a humidity of 30%RH, that is a ratio of the tensile storage elastic modulus in the atmosphere having a high temperature and a high humidity with respect to the initial tensile storage elastic modulus is, preferably within the range of 40% or more and 70% or less, and above all, preferably within the range of 45% or more and 70% or less, and particularly preferably within the range of 50% or more and 70% or less. Incidentally, the ratio of the tensile storage elastic modulus in the atmosphere having a high temperature and a high humidity with respect to the initial tensile storage elastic modulus may be simply referred to as "the rate of tensile storage elastic modulus" in some cases.

When the outer covering material of the present disclosure has the rate of tensile storage elastic modulus within the above range, it can be suitably designed for manufacturing a vacuum heat insulation material. In specific, using a resin film generally used as a thermally weldable film and managing the thickness and number of layers of the second layer and the layers thereafter within the general range would be relatively easy.

Regarding the outer covering material, the tensile storage elastic modulus of the outer covering material overall can be increased by measures such as "(1) using a film with high tensile storage elastic modulus as the thermally weldable film", "(2) reducing the thickness of the thermally weldable film", and "(3) increasing the thickness or the number of the second resin layer and the layers thereafter (layer with higher elastic modulus)". Also, by reversing each of the above features (1) to (3), it is possible to reduce the tensile storage elastic modulus of the outer covering material overall. When the rate of tensile storage elastic modulus is within the range of 40% to 70%, the initial tensile storage elastic modulus of the outer covering material overall may be approximately 1.5 * 10⁹ Pa to 3.5 * 10⁹ Pa. Also, when the rate of the rate of tensile storage elastic modulus is within the range of 50% to 70%, the initial tensile storage elastic modulus of the outer covering material overall may be designed to be approximately 1.5 * 10⁹ Pa to 3.0 * 10⁹ Pa. At this time, it is relatively easy to design the outer covering material assuming that films such as a PE film or a PP film generally used is used as the thermally weldable film and the thickness of the second layer and the layers thereafter is in a general thickness and the number of the layers is approximately 4 layers to 6 layers. Also, the outer covering material may be designed relatively freely from the other viewpoints such as cost and other physical properties.

The tensile storage elastic modulus of the outer covering material may be the average value of values measured regarding each of 8 pieces of measurement samples collected from a test piece which was cut out in a desired size from the outer covering material by the later described method, with reference to JIS K 7244-4:1999 (Plastic - Method for testing dynamic mechanical properties Section 4: Tensile vibration - non-resonant method) based on the later described measurement conditions and by a tensile method using the dynamic viscoelasticity measurement device. As the dynamic viscoelasticity measurement device, for example, DVA-225 from IT Keisoku-Seigyo Kabushiki Kaisha may be used.

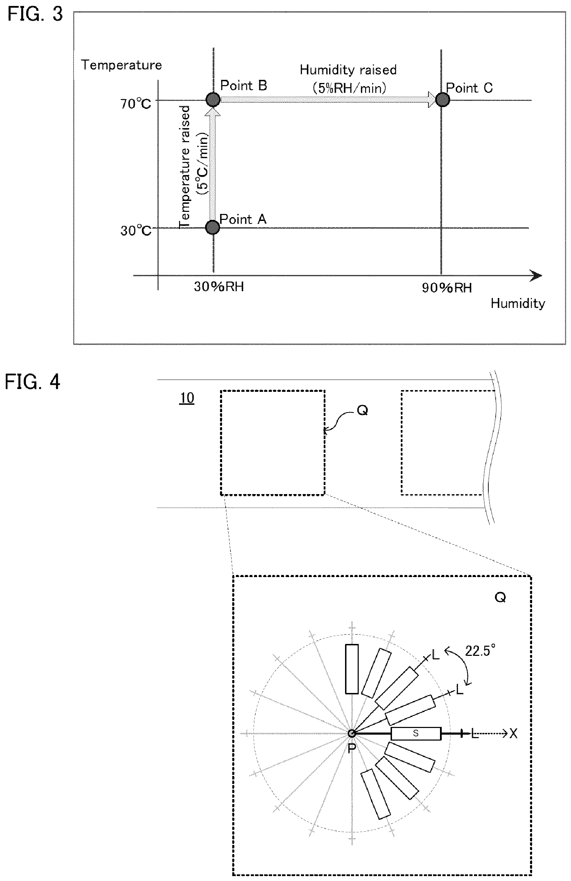

The initial tensile storage elastic modulus of the outer covering material may be the average value of the 8 pieces of measurement samples measured in the manner such that each of the 8 pieces of measurement samples are installed to a chuck so as the tensile direction is in the longitudinal direction, and values after keeping the samples in the below conditions in the atmosphere having a temperature of 30°C and a humidity of 30%RH for 15 minutes (point A in FIG. 3). Also, the tensile storage elastic modulus of the outer covering material in the atmosphere having a high temperature and a high humidity may be the average value of the 8 pieces of measurement samples measured in the manner such that each of the 8 pieces of measurement samples are, installed to a chuck so as the tensile direction is in the longitudinal direction of the measurement sample and, in the below conditions, placed in the series of steps: keeping the samples in the atmosphere having a temperature of 30°C and a humidity of 30%RH for 15 minutes (point A in FIG. 3); then the temperature is raised to 70°C at the temperature rising speed of 5°C/minute in the constant humidity; keeping the samples in the atmosphere having the temperature of 70°C and the humidity of 30%RH for 10 minutes (point B in FIG. 3); and, the humidity is raised to 90% at the humidity raising speed of 5%RH/minute in the constant temperature, and then the samples are kept in the atmosphere having a temperature of 70°C and a humidity of 90%RH for 10 minutes (point C in FIG. 3) to measure the values. Shift in each of the temperature for measuring the tensile storage elastic modulus within the range of ±0.5°C is tolerable, and shift in each of the humidity within the range of ±2.0%RH is tolerable. Incidentally, FIG. 3 is a graph showing the chronological change in the temperature and the humidity for measuring the tensile storage elastic modulus.

### <Conditions for measuring tensile storage elastic modulus>

- Measurement sample: square shape in 20 mm (Longitudinal direction) * 5 mm (short direction)
- Distance between chucks (length of measurement sample between chucks): 15 mm
- Measurement mode: tensile method (sine-wave distortion tensile mode)
- Frequency: 10 Hz
- Static load: 29.09 cN to 93.87 cN
- Amount of strain: 7.04 µm to 7.53 µm
- Static/dynamic power ratio: 1.5

The rate of the tensile storage elastic modulus may be calculated by the following formula (1):
Rate of tensile storage elastic modulus = [the tensile storage elastic modulus in the atmosphere having a temperature of 70°C and a humidity of 90%RH] / [the tensile storage elastic modulus in the atmosphere having a temperature of 30°C and a humidity of 30%RH] * 100 (%) ... (1)

The measurement sample to be used in the measurement of the tensile storage elastic modulus may be collected by the method as shown in FIG. 4. Regarding the measurement sample S, as shown in FIG. 4, a test piece Q in a desired size is cut out from the outer covering material 10, in the surface of the test piece Q, the reference point P, and the reference axis L that extends from the reference point P as the starting point to an arbitrary one direction X in the surface, are determined. The reference axis L is rotated per 22.5°making the center of rotation as the reference point P, on the reference axis L at each position, a measurement sample is collected so as the one direction X of the reference axis L becomes the longitudinal direction of the measurement sample. Thereby, 8 pieces of radical measurement samples S per one test piece Q may be collected making the reference point P as the center. All of the 8 pieces of the measurement samples are in the size of the above described measurement sample. The position on the reference axis for collecting the measurement samples may be, for example, the position where the axis passes through the center of the square.

The test piece to be cut out from the outer covering material is, preferably at least 1 or more, and above all, preferably 3 or more. If the test piece is 2 or more, the tensile storage elastic modulus of the outer covering material initially and in the atmosphere having a high temperature and a high humidity may be the value calculated in the manner such that each of the average tensile storage elastic modulus of the 8 pieces of the measurement sample that is the tensile storage elastic modulus per one test piece is calculated, and the values are averaged by the number of the test piece.

### 2. Second characteristic

In the outer covering material of the present disclosure, the indentation elastic modulus of each resin layer: the first resin layer, the second resin layer, the third resin layer, and the fourth resin layer, has the specific magnitude correlation. That is, the indentation elastic modulus of the second resin layer is not less than the indentation elastic modulus of the first resin layer; the indentation elastic modulus of the third resin layer is not less than the indentation elastic modulus of the second resin layer; and the indentation elastic modulus of the fourth resin layer is not less than the indentation elastic modulus of the third resin layer. Here, the indentation elastic modulus of each resin layer refers to the value in the atmosphere having a temperature of 23°C and a humidity of 60%RH.

The indentation elastic modulus of the first resin layer (E'₁) may be, for example, within the range of 0.3 Pa or more and 2.5 Pa or less, and above all, is preferably within the range of 0.5 Pa or more and 2.0 Pa or less, and particularly preferably within the range of 0.5 Pa or more and 1.0 Pa or less.

The indentation elastic modulus of the second resin layer (E'₂) is not less than the indentation elastic modulus of the first resin layer(E'₁), and above all, preferably more than the indentation elastic modulus of the first resin layer (E'₁). The indentation elastic modulus of the second resin layer (E'₂) may be, for example, within the range of 0.5 Pa or more and 4.0 Pa or less, and above all, is preferably within the range of 1.0 Pa or more and 3.5 Pa or less, and particularly preferably within the range of 1.5 Pa or more and 3.5 Pa or less.

The difference in the indentation elastic modulus between the first resin layer and the second resin layer Δ (E'₂ - E'₁) is 0 Pa or more, but in particular, is preferably within the range of 0.1 Pa or more and 2.0 Pa or less, and more preferably within the range of 0.5 Pa or more and 1.5 Pa or less.

The indentation elastic modulus of the third resin layer(E'₃) is not less than the indentation elastic modulus of the second resin layer (E'₂), and above all, preferably more than the indentation elastic modulus of the second resin layer (E'₂). The indentation elastic modulus of the third resin layer (E'₃) may be, for example, within the range of 0.5 Pa or more and 4.0 Pa or less, and above all, is preferably within the range of 1.0 Pa or more and 3.5 Pa or less, and particularly preferably within the range of 1.5 Pa or more and 3.5 Pa or less.

The difference in the indentation elastic modulus between the second resin layer and the third resin layer Δ (E'₃ - E'₂) is 0 Pa or more, but in particular, is preferably within the range of 0.1 Pa or more and 2.0 Pa or less, and more preferably within the range of 0.1 Pa or more and 1.5 Pa or less.

The indentation elastic modulus of the fourth resin layer(E'₄) is not less than the indentation elastic modulus of the third resin layer (E'₃), and preferably more than the indentation elastic modulus of the third resin layer (E'₃). The indentation elastic modulus of the fourth resin layer (E'₄) may be, for example, within the range of 0.5 Pa or more and 4.0 Pa or less, and above all, is preferably within the range of 1.0 Pa or more and 3.5 Pa or less, and particularly preferably within the range of 1.5 Pa or more and 3.5 Pa or less.

The difference in the indentation elastic modulus between the third resin layer and the fourth resin layer Δ (E'₄ - E'₃) is 0 Pa or more, but in particular, is preferably within the range of 0.1 Pa or more and 2.0 Pa or less, and more preferably within the range of 0.1 Pa or more and 1.5 Pa or less.

The indentation elastic modulus of each of the resin layer may be measured using an ultra-micro load hardness testing machine by the method in accordance with the ISO 14577:2015. Measurement is carried out in a manner such that a sample in a desired size is cut out from the outer covering material which is before placing thereof in the atmosphere having a high temperature and a high humidity, and in the cross-section or the surface of the cut-out material, the targeted resin layer is subjected to the measurement using the Vickers indenter (the positive square bit diamond indenter of which face-to-face angle is 13.6°) attached to the ultramicro hardness testing machine in the conditions of indentation speed of 0.1 µm/second, indentation depth of 2 µm, keeping time of 5 seconds, and pulling out speed of 0.1 µm/second. The measurement is carried out in an atmosphere having a temperature of 23°C ± 2°C, and a humidity of 60%RH ± 5%RH. As the ultramicro hardness testing machine, for example, PICODENTORTM HM500 (from FISCHER INSTRUMENTS K.K.) may be used.

On the occasion of measuring the cross section of the sample of the outer covering material, the outer periphery of the sample is solidified with a curing resin, and fixed, and the fixed sample is cut in the thickness direction with a diamond knife to measure the cross section exposed. Also, on the occasion of measuring the surface of the sample of the outer covering material, the surface which is on the opposite side to the surface targeted to be measured is fixed with curing resin-based adhesive to a flat glass plate having the thickness of 1.1 mm to measure the surface. The thickness of each of the resin layer on the occasion of calculating the indentation elastic index may be measured by the measurement with an optical microscopic observation of the machining cross section.

In one condition, at least 5 different points of the resin layer targeted for the measurement in one sample cut out are measured, and the average of the measured values is regarded as the value of the indentation elastic modulus of the resin layer targeted for the measurement in that condition.

Incidentally, as described later, the outer covering material of the present disclosure may have four or more of the resin layer. In this case, each of the layer after the fourth layer preferably has larger indentation elastic modulus in the order from the first resin layer side, and the indentation elastic modulus of one resin layer in the outer covering material is preferably the value of the indentation elastic modulus of the other resin layer adjacent to the one resin layer in the first resin layer side. The range of the indentation elastic modulus of the resin layers from the fifth layer and the layers thereafter may be respectively within the same range as the range of the indentation elastic modulus of the second to fourth resin layers described above.

### 3. Other characteristics

The initial water vapor permeability of the outer covering material of the present disclosure is preferably 0.1 g/(m²·day) or less, and above all preferably 0.05 g/(m²·day) or less, and particularly preferably 0.01 g/(m²·day) or less. Also, the water vapor permeability of the outer packing material of the present disclosure after being kept in the atmosphere having a temperature of 70°C and a humidity of 90% for 1000 hours is preferably 0.1 g/(m²·day) or less, and above all, preferably 0.08 g/(m²·day) or less, and particularly preferably 0.05 g/(m²·day) or less. The water vapor permeability after being kept in the atmosphere having a temperature of 70°C and a humidity of 90% for 1000 hours may be referred to as "water vapor permeability after being kept in a high temperature and a high humidity" in some cases.

The reason therefor is that when the water vapor permeability of the outer covering material of the present disclosure after being kept at a high temperature and a high humidity is in the above range, it may exhibit excellent gas barrier properties as an outer covering material solely for a long period of time regardless of the environment having a high temperature and a high humidity; thus, permeation of gas into a vacuum heat insulation material using the outer covering material of the present disclosure may be inhibited to maintain the heat insulation performance for a long period of time in the environment having a high temperature and a high humidity.

The initial water vapor permeability of the outer covering material may be measured using a water vapor permeability measurement device in the conditions of at a temperature of 40°C and relative humidity difference of 90%RH in accordance with ISO 15106-5:2015 (differential pressure method). The initial water vapor permeability measurement may be carried out in the following steps: first, the outer covering material cut out in a desired sample size is installed between an upper room and a lower room of the device so as the outermost surface positioned at the fourth resin layer side in the thickness direction (layered direction) among the surfaces of the outer covering material comes to high humidity side (water vapor supplying side), and the measurement is carried out to the permeation area of approximately 50 cm² (permeation region: circle having the diameter of 8 cm) in the conditions of temperature at 40°C and a relative humidity difference of 90%RH. As the water vapor permeability measurement device, for example, "DELTAPERM" from U.K. Technolox Ltd. may be used.

Also, the water vapor permeability of the outer covering material after being kept at a high temperature and a high humidity may be measured using a water vapor permeability measurement device in the conditions of at a temperature of 40°C and relative humidity difference of 90%RH in accordance with JIS K 7129:2008 (Annex B: Infrared sensor method; the same hereinafter). The water vapor permeability after being kept at a high temperature and a high humidity may be measured in the following steps: first, two pieces of the outer covering material in a square shape having a width of 21.0 cm and a length of 29.7 cm are prepared and they are overlapped so as each of the first resin layer faces to each other, then the edge of the entire periphery thereof (region having a width of 10 mm at the position of 1 cm from the outer flame of the outer covering material) is thermally welded at a heating temperature of 170°C in the atmospheric pressure so as to bond to make a test piece; the test piece does not enclose anything inside, and also it is in the condition not decompressed; the test piece is kept at a temperature of 70°C and a humidity of 90%RH for 1000 hours, a sample in the size having a width of 9 cm and a length of 9 cm is cut out from the test piece after being kept which is in the region not thermally welded, and the water vapor permeability of the cut-out outer covering material is measured in the same measurement method and conditions as for the initial water vapor permeability. As the water vapor permeability measurement device, for example, "PERMATRAN" from U.S. MOCON may be used.

The measurements of the water vapor permeability initially and after being kept at a high temperature and a high humidity are respectively carried out in one condition, at least 3 pieces of the sample are measured and the average of these measured values is regarded as the value of water vapor permeability in that condition. Hereinafter, the water vapor permeability initially and after being kept at a high temperature and a high humidity in the present disclosure may be measured in each method described above.

The initial oxygen permeability of the outer covering material of the present disclosure is preferably 0.1 cc/(m²·day·atm) or less, and above all, preferably 0.05 cc/(m²·day·atm) or less. Also, the oxygen permeability of the outer covering material of the present disclosure after being kept in the atmosphere having a temperature of 70°C and a humidity of 90%RH for 1000 hours is preferably 0.2 cc/(m²·day·atm) or less, and above all, preferably 0.1 cc/(m²·day·atm) or less. Incidentally, the oxygen permeability after being kept in a temperature of 70°C and a humidity of 90%RH for 1000 hours may be referred to as the oxygen permeability after being kept at a high temperature and a high humidity in some cases.

The reason therefor is that when the oxygen permeability of the outer covering material of the present disclosure after being kept at a high temperature and a high humidity is in the above range, it may exhibit excellent gas barrier properties as an outer covering material solely for a long period of time regardless of the environment having a high temperature and a high humidity; thus, permeation of gas into a vacuum heat insulation material using the outer covering material of the present disclosure may be inhibited to maintain the heat insulation performance for a long period of time in the environment having a high temperature and a high humidity.

The oxygen permeability of the outer covering material of the present disclosure initially and after being kept at a high temperature and a high humidity may be respectively measured using an oxygen gas permeability measurement device with reference to JIS K7126-2:2006 (Plastic - film and sheet - gas permeability test method- Section 2: Isopiestic method, Annex A: Test method of oxygen gas permeability with electrolytic sensor method) with the conditions of carrier gas and test gas adjusted to a temperature of 23°C and a humidity of 60%RH. As the oxygen permeability measurement device, for example, "OXTARAN" from U.S. MOCON may be used.

The measurement of the initial oxygen permeability may be carried out in the manner such that the outer covering material cut out in a desired sample size is installed to the device so as the outermost surface positioned at the fourth resin layer side in the thickness direction (layered direction) among the surfaces of the outer covering material comes to contact oxygen gas, and the measurement is carried out to the permeation area of approximately 50 cm² (permeation region: circle having the diameter of 8 cm) with the conditions of carrier gas and test gas adjusted to a temperature of 23°C and a humidity of 60%RH. On the occasion of the measurement, the carrier gas is supplied to the device at a flow rate of 10 cc/min for 60 minutes or more to purge. As the carrier gas, nitrogen gas including approximately 5% of hydrogen may be used. The measurement is carried out after securing 12 hours as the time from letting the test gas flow to the device to reaching to the equilibrium state followed by the purge. As the test gas, the dry oxygen of at least 99.5% is used.

Also, the oxygen permeability after being kept at a high temperature and a high humidity may be measured in the following steps: first, two pieces of the outer covering material in a square shape having a width of 21.0 cm and a length of 29.7 cm are prepared and they are overlapped so as each of the thermally weldable film faces to each other, then the edge of the entire periphery thereof (region having a width of 10 mm at the position of 1 cm from the outer flame of the outer covering material) is thermally welded at a heating temperature of 170°C in the atmospheric pressure so as to bond to make a test piece; the test piece does not enclose anything inside, and also it is in the condition not decompressed; the test piece is kept at a temperature of 70°C and a humidity of 90%RH for 1000 hours, a sample in the size having a width of 9 cm and a length of 9 cm is cut out from the test piece, which is in the region not thermally welded, and the oxygen permeability of the cut-out outer covering material is measured in the same measurement method and conditions as for the initial oxygen permeability.

The measurements of the oxygen permeability initially and after being kept at a high temperature and a high humidity are respectively carried out in one condition, at least 3 pieces of the sample are measured and the average of these measured values is regarded as the value of oxygen permeability in that condition. Hereinafter, the oxygen permeability initially and after being kept at a high temperature and a high humidity in the present disclosure may be measured in each method described above.

### B. Constitution

The outer covering material of the present disclosure is characterized by comprising: at least four resin layers, namely, a first resin layer, a second resin layer, a third resin layer, and a fourth resin layer, and at least three gas barrier layers, and wherein: the first resin layer is a thermally weldable film; at least one or more of the gas barrier layers are arranged between the second resin layer and the third resin layer; and at least one or more of the gas barrier layers are arranged between the third resin layer and the fourth resin layer.

Hereinafter, members configured in the outer covering material of the present disclosure are explained.

### 1. First resin layer

The first resin layer in the outer covering material of the present disclosure is a thermally weldable film. The thermally weldable film is a film that can be welded by heating thereof. The thermally weldable film is positioned at the outermost in one of the thickness direction of the outer covering material of the present disclosure and is a member working as a surface of one of the thickness direction of the outer covering material. The thermally weldable film contacts with a core material when a vacuum heat insulation material is manufactured using the outer covering material of the present disclosure, and it is a member for bonding the edge of the outer covering materials facing to each other when the core material is enclosed therein.

The thermally weldable film is preferably a film mainly composed of a thermoplastic resin so as to be melted and fused by heating. Mainly composed of a thermoplastic resin means that the content of the thermoplastic resin in the thermally weldable film is 50 mass% or more; above all, the content is preferably 90 mass% or more, and in particular, preferably 100 mass%, which means that the thermally weldable film is configured by only one kind of a thermoplastic resin.

Examples of such a thermally weldable film may include a polyethylene such as straight chain-shaped short chain branched polyethylene (LLDPE), a polyolefin-based resin film such as unstretched polypropylene (CPP), a polyester-based resin film such as polyethylene terephthalate (PET), polyethylene naphthalate (PEN), and polybutylene terephthalate (PBT), a polyvinyl acetate-based resin film, a polyvinyl chloride-based resin film, a poly(meth)acrylic resin film, and an urethane resin film.

Among them, the polyolefin-based resin film or the polyester-based resin film are preferable; in specific, one kind selected from the group of a straight chain-shaped short chain branched polyethylene (LLDPE) film, an unstretched polypropylene (CPP) film, a polyethylene terephthalate (PET) film and a polybutylene terephthalate (PBT) film, is preferable. These are preferable on the point that the generation of cracks in other members such as the gas barrier layers at the junction of outer covering materials may be inhibited when the vacuum heat insulating material is formed.

The thermally weldable film may include an additional material such as an anti-blocking agent, a lubricant, a flame retardant, and a filler material.

The melting point of the thermally weldable film varies with the resins to be used; however, for example, it is preferably within the range of 80°C or more and 300°C or less, and above all, preferably within the range of 100°C or more and 250°C or less. The reason therefor is to inhibit the bonded surface of the outer covering materials from peeling-off under the environment where the vacuum heat insulation material using the outer covering material of the present disclosure is used. Also, it is to inhibit the heat deterioration of the layer containing a M-O-P bond when the outer covering materials are thermally welded to each other.

The melting point of the thermally weldable film may be measured by the method below using Differential Scanning Calorimeter (DSC). First, the thermally weldable film is peeled off from the outer covering material to obtain approximately 10 mg of a measurement sample. This measurement sample is put in an aluminum cell and the temperature thereof is raised from 20°C to 300°C at the temperature raising speed of 10°C/minute in a nitrogen atmosphere using Differential Scanning Calorimeter (DSC204 from NETZSCH Japan K.K.), and the raised temperature was kept for 10 minutes. Further, the temperature is cooled to 20°C at the temperature dropping speed of 10°C/minute, the cooled temperature was kept for 10 minutes, and then the temperature was raised again to 300°C at the temperature raising speed of 10°C/minute (2^{nd} temperature raise). The intersection point of the tangent at the melting point observed in the second temperature rise and the baseline of the DSC curve at the temperature in lower side than the melting point may be the melting point of the thermally weldable film.

The thickness of the thermally weldable film may be in the thickness with which desired adhesiveness is obtained when the outer covering materials are bonded; for example, it is within the range of 15 µm or more and 100 µm or less, preferably within the range of 25 µm or more and 90 µm or less, and more preferably within the range of 30 µm or more and 80 µm or less.

### 2. Second resin layer, third resin layer, and fourth resin layer

The second to fourth resin layer in the outer covering material of the present disclosure may be respectively, for example, a resin base material and a protective film in a gas barrier film depending on their positions. In specific, the second resin layer and the third resin layer may be the resin base material in the gas barrier film. Also, the fourth resin layer may be the resin base material in the gas barrier film, and may be the protective film.

Examples of a resin configuring the resin layer may include a variety of resins such as a polyolefin resin, a polyester resin, a cyclic polyolefin resin, a polystyrene resin, an acrylonitrile-styrene copolymer (AS resin), an acrylonitrile-butadiene-styrene copolymer (ABS resin), a poly (meth) acrylic acid resin, a polycarbonate resin, a polyvinyl alcohol-based resin, an ethylene-vinyl acetate copolymer (EVAL) resin, a polyamide resin such as a variety of nylon, a polyimide resin, a polyurethane resin, an acetal resin, and a cellulose resin. Each of the resin layers may be configured by one kind of the above described resin solely, or may be configured by the mixture of two kinds or more.

The resin layer may be a resin film mainly composed of one kind or more of the above described resins. The resin film may be unstretched and may be uniaxial stretched or biaxial stretched. Also, the resin layer may or may not have transparency. In the resin layer, "mainly composed of" a specific resin means that the proportion of the specific resin (which may be referred to as a target resin in some cases) is the most among the resins configuring the resin layer; the amount signifies the amount satisfying the above described characteristics. In specific, it means that the content of the target resin in the resin layer is 50 mass% or more; above all, the content is preferably 90 mass% or more, and particularly preferably 100 mass%.

In particular, the resin layer is preferably mainly composed of at least one kind selected from the group consisting of a polyester resin, a polypropylene resin, a cyclic polyolefin resin, a polyvinyl alcohol-based resin, and an ethylene-vinyl acetate copolymer (EVAL) resin.

In other words, the resin layer is preferably at least one kind selected from the group consisting of a polyester resin film, a polyvinyl alcohol-based resin film, an ethylene-vinyl acetate copolymer (EVAL) resin film, a stretched polypropylene resin film, and a cyclic polyolefin resin film. The reason therefor is that the size change of the resin layer selected from the resin film group is small in the environment having a high temperature and a high humidity.

The resin layer is further preferably the polyester resin film among the resin film group. As the polyester resin that is the main component of the polyester resin film, one kind or two kinds or more of the resin satisfying the desired characteristics may be appropriately selected from the polycondensate of polycarboxylic acid and polyalcohol. In specific, the polyester resin may be one kind or two kinds or more of the resin selected from the group of polyethylene terephthalate (PET), polyethylene naphthalate (PEN), polybutylene terephthalate (PBT), and polytrimethylene terephthalate (PTT) (the group may be hereinafter referred to as a polyester resin group).

When the fourth resin layer is the outermost layer at one side in the thickness direction of the outer covering material of the present disclosure, the fourth resin layer is preferably mainly composed of a resin of which melting point is higher than that of the thermally weldable film. The definition of mainly composed of is as already described in the other layer. Examples of the resin may include polyolefin resins such as a polyester resin, a polyamide resin, and polypropylene, a polyurethane resin, an amino resin, a silicone resin, an epoxy resin, a polyimide resin, polyvinyl chloride (PVC), a polycarbonate resin, polystyrene (PS), a polyvinyl alcohol (PVA) resin, an ethylene-vinyl acetate copolymer (EVAL) resin, polyacrylonitrile (PAN), and cellulose nanofiber (CNF). In the case above, the fourth resin layer may be configured by one kind solely, or may be configured by the mixture of two kinds or more, of the above described resins.

When the fourth resin layer is the outermost layer at one side in the thickness direction of the outer covering material of the present disclosure, as the fourth resin layer, above all, films such as a polyethylene terephthalate (PET) film, a polyethylene naphthalate (PEN) film, a polybutylene terephthalate (PBT) film, a stretched polypropylene (OPP) film, and a polyvinyl chloride (PVC) film may be suitably used.

Each of the second to the fourth resin layer may be configured by totally the same resin or may be configured by different resins as long as the indentation elastic modulus of each of the resin layer may have the above described desired magnitude correlation.

Each of the second to the fourth resin layer may include a hydrophilic group-containing resin or may not include the hydrophilic group-containing resin; it may be appropriately selected in accordance with the arrangement position in the outer covering material of the present disclosure. Here, the "hydrophilic group" refers to an atomic group that shows affinity for water such that electrostatic interactions and hydrogen bonds create weak bong with water molecules; for example, an atomic group including polar groups such as a hydroxy group (-OH), a carboxy group (-COOH), an amino group (-NH₂), a carbonyl group (>CO), and a sulfo group (-SO₃H) and a leaving group shows that characteristic. The hydrophilic group-containing resin is the resin including the above described functional group; specific examples thereof may include a polyvinyl alcohol-based. resin such as polyvinyl alcohol (PVA) and an ethylene-vinyl alcohol copolymer (EVOH), a poly (meth)acrylic acid resin, and a cellulose resin.

It is preferable that at least one of the second resin layer and the third resin layer contains the hydrophilic group-containing resin, and it is more preferable that the layer is mainly composed of the hydrophilic group-containing resin. The reason therefor is to maintain the gas barrier properties in the environment having a high temperature and a high humidity since the gas barrier layer arranged between the second resin layer and the third resin layer is not easily exposed to water vapor and thus the degrade of the gas barrier layer in oxygen barrier properties due to the water vapor deterioration may be inhibited.

Also, the fourth resin layer may include the hydrophilic group-containing resin and may not include the hydrophilic group-containing resin; however, when the fourth resin layer is not the outermost layer at one side in the thickness direction of the outer covering material of the present disclosure, the hydrophilic group-containing resin is preferably included, and it is more preferable that the layer is mainly composed of the hydrophilic group-containing resin. The reason therefor is to maintain the gas barrier properties in the environment having a high temperature and a high humidity since the gas barrier layer arranged between the third resin layer and the fourth resin layer is not easily exposed to water vapor and thus the degrade of the gas barrier layer in oxygen barrier properties due to the water vapor deterioration may be inhibited.

On the other hand, when the fourth resin layer is the outermost layer at one side in the thickness direction of the outer covering material of the present disclosure, it is preferable that the fourth resin layer does not include the hydrophilic group-containing resin. The reason therefor is that although the hydrophilic group-containing resin is excellent in oxygen barrier properties, the properties are easily degraded when exposed to water vapor.

Here, the resin layer does not include the hydrophilic group-containing resin refers to, not only the case the hydrophilic group-containing resin is not at all included, but also the case the hydrophilic group-containing resin is included in an amount capable of satisfying the above described characteristics. In specific, the content of the hydrophilic group-containing resin in the resin layer is preferably less than 50 mass%, and above all, preferably 10 mass% or less, and particularly preferably 0 mass% or less, which means that the hydrophilic group-containing resin is not at all included.

Hereinafter, the content of the specific resin in the resin layer when the resin layer "does not include" the specific resin may be in the same range as described above.

It is preferable that at least the fourth resin layer does not include a polyamide resin such as nylon. The fourth resin layer is the outermost layer at one side in the thickness direction of the outer covering material of the present disclosure or the layer adjacent to the outermost layer, which is easily affected by water vapor exposure; thus, when at least the fourth resin layer does not include the polyamide resin, the size change rate of the outer covering material overall in the environment having a high temperature and a high humidity may be suppressed to be low. Above all, it is preferable that each of the second to the fourth resin layer does not include the polyamide resin.

The resin layer may include an additive. Examples of the additive may include a lubricant, a crosslinking agent, an antioxidant, a UV-absorbent, a light stabilizer, a filler, a reinforcing agent, an anti-static agent, a pigment, a resin for modification, an anti-blocking agent, and a flame retardant agent. Also, the resin layer may be subjected to a surface treatment. The reason therefor is to improve the adhesion with the gas barrier layer.

The resin layer may be a film and may be a sheet. When a resin film is used as the resin layer, the resin film may be unstretched, and may be uniaxial stretched or biaxial stretched. Also, the resin layer may and may not have transparency.

The thickness of the resin layer is not limited, and may be appropriately set depending on the position in the outer covering material. The thickness is, for example, within the range of 6 µm or more and 200 µm or less, and it may be more preferably within the range of 9 µm or more and 100 µm or less. Also, when the fourth resin layer is the outermost layer at one side in the thickness direction of the outer covering material of the present disclosure among the second to the forth resin layers, the thickness of the fourth resin layer may be, for example, within the range of 5 µm or more and 80 µm or less.

When the fourth resin layer is the outermost layer at one side in the thickness direction of the outer covering material of the present disclosure among the second to the forth resin layers, the fourth resin layer may have an overcoat layer at one surface. The reason therefor is that the fourth resin layer is capable of exhibiting high gas barrier properties by itself depending on the kind of resin therein, and the inclusion of the overcoat layer may improve the gas barrier properties of the fourth resin layer itself. The overcoat layer in the fourth resin layer is preferably arranged so as to be at the first resin layer side in the thickness direction of the outer covering material of the present disclosure.

The overcoat layer may be a layer mainly composed of a composition of a publicly known overcoat agent, and examples thereof may include a mixture compound layer mainly composed of a mixture compound including an organic portion and an inorganic portion. Examples of the mixture compound layer may include a zinc acrylate-based mixture membrane disclosed in JP-B No. 4373797 (such as BESELA (registered trademark) from TOPPAN PRINTING CO., LTD.) and a mixture compound layer containing a metal element, an oxygen element, and a hydrophilic group-containing resin. Among them, the mixture compound layer containing a metal element, an oxygen element, and a hydrophilic group-containing resin is preferable.

Examples of the mixture compound containing a metal element, an oxygen element, a hydrophilic group-containing resin may include a sol-gel compound that contains at least one kind or more of a metal alkoxide represented by the general formula R¹ₙM²(OR²)ₘ (provided that, in the formula, R¹ and R² represent an organic group having 1 or more and 8 or less carbon atoms, M² represents a metal atom, n represents an integer of 0 or more, m represents an integer of 1 or more, and n + m represents the valence of M²) and a hydrophilic group-containing resin, and those materials further polymerized and condensed by a sol-gel method. The sol-gel compound has high adhesive strength in the interface and also, it may be treated at a comparatively low temperature when forming a membrane thereof; thus, the deterioration due to the heat of a material such as the resin layer may be inhibited. Examples of the metal alkoxide may include alkoxysilane including silicon such as tetraethoxysilane Si(OC₂H₅)₄. Also, examples of the hydrophilic group-containing resin may include a polyvinylalcohol-based resin and/or an ethylene-vinylalcohol copolymer. Details of the sol-gel compound and a method for forming an overcoat layer including the sol-gel compound may be the same as the details disclosed in JP-B No. 5568897; thus, the explanations herein are omitted.

The overcoat layer is in the thickness with which desired properties can be exhibited; for example, it may be within the range of 50 nm or more and 500 nm or less, and preferably within the range of 100 nm or more and 400 nm or less.

### 3. Gas barrier layer

The outer covering material of the present disclosure comprises at least three gas barrier layers, and wherein at least one or more of the gas barrier layers are arranged between the second resin layer and the third resin layer, and at least one or more of the gas barrier layers are arranged between the third resin layer and the fourth resin layer.

Any resin layers from the second to the fourth, and the gas barrier layer arranged on at least one surface of the resin layer may configure the gas barrier film.

The gas barrier layer may be the one that has gas barrier properties for inhibiting gas such as oxygen and water vapor from permeating therethrough, and examples thereof may include an inorganic layer and a layer containing a M-O-P bond (here, M represents an inorganic atom, O represents an oxygen atom, and P represents a phosphorous atom).

### (1) Inorganic layer

The inorganic layer is a layer formed of an inorganic material. The inorganic layer is distinguished from the later described layer containing a M-O-P bond on the point of not including the M-O-P bond; the inorganic layer does not include the layer containing a M-O-P bond. The presence or absence of the M-O-P bond in the inorganic layer may be confirmed by the same method as the method for confirming the presence or absence of the M-O-P bond in the later described layer containing the M-O-P bond.

Examples of the inorganic material configured in the inorganic layer may include a metal (including an alloy) and an inorganic compound. Also, the inorganic layer may be any one of a metal foil, a metal membrane, and an inorganic compound membrane. The metal membrane and the inorganic compound membrane may be generally referred to as an inorganic thin membranes in some cases. Among them, the inorganic layer is preferably the metal foil or the metal membrane, and particularly preferably the metal membrane. The reason therefor is that the metal layer is comparatively more reasonable compared to the inorganic compound membrane, and is excellent in bend-resisting properties.

### (a) Metal foil

Examples of the metal foil may include a foil of metal such as aluminum, nickel, stainless steel, iron, copper, and titanium; among them, an aluminum foil is suitably used.

When the inorganic layer is a metal foil, a single layer of the metal foil may be one inorganic layer, and a multilayered metal foil formed of the foils having the same composition or different compositions may be one inorganic layer.

When the inorganic layer is the metal foil, the thickness per one inorganic layer may be, for example, 9 µm or less, may be 7 µm or less, and may be 6.5 µm or less. Also, the thickness may be, for example, 5 µm or more.

### (b) Inorganic thin membranes

As the inorganic thin membranes, a metal membrane or an inorganic compound membrane may be exemplified.

The metal membrane is a thin membrane formed of a metal; for example, publicly known metal membranes as a gas barrier film such as a membrane of metal such as aluminum, stainless steel, titanium, nickel, iron, and copper, and an alloy membrane including one or more of the metals above may be used.

Also, the inorganic compound membrane is a thin membrane mainly composed of an inorganic compound, and examples thereof may include a thin membrane formed of, for example, a metal element such as silicon (silica), aluminum, stainless steel, titanium, nickel, iron, copper, magnesium, calcium, potassium, tin, sodium, boron, lead, zinc, zirconium, and yttrium, or an oxide or a nitride of a non-metal element.

When the inorganic layer is the inorganic thin membranes, a single membrane of the inorganic thin membranes formed by method such as one time vapor deposition may be one inorganic layer, and a multilayered inorganic thin membranes configured with the same composition membrane or the inorganic thin membranes having different compositions may be one inorganic layer.

When the inorganic layer is the inorganic thin membranes, the thickness per one inorganic layer may be, for example, within the range of 5 nm or more and 200 nm or less, and above all, is preferably within the range of 10 nm or more and 150 nm or less.

The inorganic thin membranes may be a coat membrane using coating, and may be a vapor deposition membrane; however, from the view point of making the adhesion with the resin layer higher to exhibit higher gas barrier properties, the vapor deposition membrane is preferable. The vapor deposition membrane may be a single membrane formed by one time vapor deposition, and may be a multilayered membrane formed by a multiple of times vapor depositions. When the inorganic thin membranes is the multilayered membrane, the membranes having the same composition may be combined, and the membranes having different compositions may be combined.

The inorganic thin membranes may be formed in a shape of membrane using publicly known methods such as a coat method, a vapor deposition method, and a pressure joint method, depending on the materials and the kinds of the membranes.

### (c) Others

When the gas barrier layer is the inorganic layer, an overcoat layer may be arranged at the surface that is opposite to the surface contacting the resin base material of the inorganic layer. The overcoat layer may be the same as the overcoat layer explained in the section "2. Second resin layer, third resin layer, and fourth resin layer" above.

### (2) Layer containing M-O-P bond

The layer containing a M-O-P bond contains at least a M-O-P bond (here, M represents an inorganic atom, O represents an oxygen atom, and P represents a phosphorous atom). Examples of the layer containing the M-O-P bond may include a layer including a reaction product of a metal oxide and a phosphorous compound. In the layer containing the M-O-P bond including the reaction product of a metal oxide and a phosphorous compound, M is a metal atom.

### (a) Reaction product

The reaction product included in the layer containing the M-O-P bond has a specific structure in which particles of the metal oxide are bonded via phosphorous atom derived from the later described phosphorous compound. Such a reaction product and structure may be formed by mixing a metal oxide and a phosphorous compound to react with each other.

### (i) Metal oxide

The metal atom (M) configured in the metal oxide is preferably at least one kind selected from the group consisting of aluminum, titanium, and zirconium, since they may be easily handled for producing a metal oxide, and since the gas barrier properties of the composite structural body to be obtained therewith are excellent. Aluminum is particularly preferable. The metal atom (M) configured in the metal oxide may be one kind, and may be two kinds or more.

### (ii) Phosphorous compound

The phosphorous compound contains a portion capable of reacting with the metal oxide, and typically contains a plurality of the portion capable of reacting with the metal oxide. Examples of the portion capable of reacting with the metal oxide may include a portion capable of reacting with a functional group (such as a hydroxyl group) present in the surface of the metal oxide; for example, a halogen atom directly bonded with a phosphorous atom and an oxygen atom directly bonded with a phosphorous atom may be included. Those halogen atom and oxygen atom may cause condensation reaction (hydrolysis decomposition condensation reaction) with the hydroxyl group present in the surface of the metal oxide.

Examples of the phosphorous compound may include a phosphoric acid, a polyphosphoric acid, a phosphorous acid, a phosphonic acid, and the derivatives of these. These phosphorous compounds may be used in one kind solely, and two kinds or more thereof may be used in combination. Among those phosphorous compounds, it is preferable that the phosphoric acid is used solely, or the phosphoric acid and phosphorous compounds other than that are used in combination since the stability of a coating liquid therewith for forming the layer containing the M-O-P bond using the coating liquid is excellent, and the gas barrier properties of the layer containing the M-O-P bond to be obtained therewith are excellent.

### (iii) Others

The rate of the mol number of the metal atom (N_{M}) configured in the metal oxide and the mol number of the phosphorous atom (N_{P}) derived from the phosphorous compound preferably satisfies the relation of 0.8 ≤ mol number (N_{M}) / mol number (N_{P}) ≤ 4.5, and further preferably satisfies the relation of 1.1 ≤ mol number (N_{M}) / mol number (N_{P}) ≤ 3.0. If the value of mole number (N_{M}) / mol number (N_{P}) exceeds 4.5, the metal oxide is excessive to the phosphorous compound which causes insufficient bond of metal oxide particles, and also, the amount of the hydroxyl group present in the surface of the metal oxide increases which tends to lead in degrade of the gas barrier properties. Meanwhile, if the value of mole number (N_{M}) / mol number (N_{P}) is less than 0.8, the phosphorous compound is excessive to the metal oxide, which means excess phosphorous compound not contributing to the bond with the metal oxide increases, and also, the amount of the hydroxyl group derived from the phosphorous compound easily increases to easily degrade gas barrier properties after all.

### (b) Other components

The layer containing the M-O-P bond may further contain a polymer that includes at least one kind of functional group selected from the group consisting of a hydroxyl group, a carboxyl group, a carboxylic acid anhydride group, and the salt of carboxyl group. Examples of the polymer may include polyvinyl alcohol, an ethylene-vinyl alcohol copolymer, polysaccharide, polyacrylic acid, the salt of polyacrylic acid, polymethacrylic acid, and the salt of polymethacrylic acid. The content of the polymer in the layer containing the M-O-P bond per 100 mass% of the layer containing the M-O-P bond may be 30 mass% or less, and above all, may be 20 mass% or less.

The layer containing the M-O-P bond may further contain an additional component. Examples of the additional component may include an inorganic acid metal salt such as carbonate, hydrochloride, nitrate, and hydrogen carbonate, sulfate, sulfuric acid hydrogen salt, boric acid salt, and aluminate salt; an organic acid metal salt such as oxalate, acetic acid salt, tartaric acid salt, and stearic acid salt; a metal complex such as an acetylacetonato metal complex (such as aluminum acetylacetonato), a cyclopentadienyl metal complex (such as titanocene) and a cyano metal complex; a layered clay compound; a crosslinking agent; a plasticizer; an antioxidant; an UV absorbent; and a flame retardant. The content of the additional compound in the layer containing the M-O-P bond is preferably 5 mass% or less, and it may be 0 mass%, which means that the additional component is not included.

### (c) Others

The layer containing the M-O-P compound may be configured by just the reaction product which is formed by the reaction of at least the metal oxide and the phosphorous compound (provided that the one containing a polymer portion is also included), and may be configured by the said reaction product and a polymer not reacted. It may further contain the additional component above.

The presence or absence of the M-O-P bond in the layer containing the M-O-P bond may be judged by the presence or absence of the infrared ray absorption peak within the range of 1080 cm⁻¹ or more and 1130 cm⁻¹ or less in the infrared ray absorption spectrum.

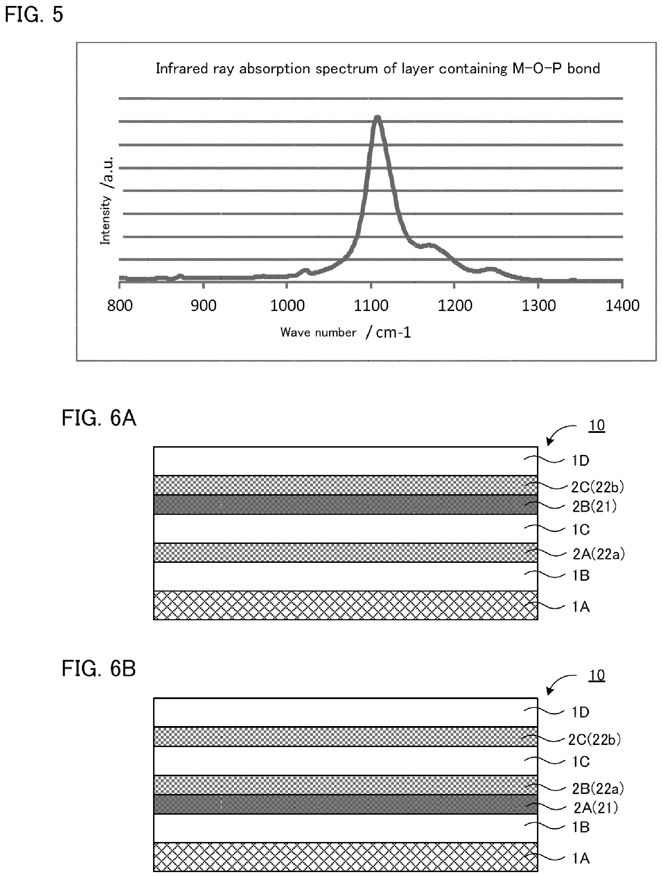

An example of the infrared ray absorption spectrum of the layer containing the M-O-P bond is shown in FIG. 5. The infrared ray absorption spectrum is the one measured within the range of 800 cm⁻¹ or more and 1400 cm⁻¹ or less using a Fourier transform-type infrared spectrophotometer (FTS7000 from Varian Inc.) as a measurement device with a total reflection measurement method (ATR method). In the infrared ray absorption spectrum of the layer containing the M-O-P bond within the range of 800 cm⁻¹ or more and 1400 cm⁻¹ or less, the infrared ray absorption peak derived from the M-O-P bond, in which the metal atom configured in the metal oxide bonds with the phosphorous atom derived from the phosphorous compound via an oxygen atom, is the maximum among all the infrared ray absorption peaks derived from the bond configuring the metal oxide, the bond configuring the phosphorous compound, and the bond formed by the reaction of the metal oxide itself, the phosphorous compound itself, and/or the reaction of each other. In other words, the wavenumber of the maximum infrared ray absorption peak (n¹) is preferably within the range of 1080 cm⁻¹ or more and 1130 cm⁻¹ or less. The reason therefor is to allow the layer containing the M-O-P bond to have excellent gas barrier properties.

In the infrared ray absorption spectrum of the layer containing the M-O-P bond, the half-value width of the absorption peak of which maximum is at the maximum absorption wave number (n¹) is preferably 200 cm⁻¹ or less from the viewpoint of the gas barrier properties of the layer containing the M-O-P bond, and it is more preferably 100 cm⁻¹ or less, and particularly preferably 50 cm⁻¹ or less.

There are no particular limitations on the method for measuring the infrared ray absorption spectrum of the layer containing the M-O-P bond; for example, the measurement method using a total reflection measurement method (ATR method) may be used. Also, a method in which a sample is scraped from the layer containing the M-O-P bond in the outer covering material and the infrared ray absorption spectrum of the sample is measured with a KBr method, and a measurement method with a microscopic infrared spectroscopy to a collected sample may be used. Incidentally, when the resin layer is arranged on one surface or the both surfaces of the layer containing the M-O-P bond, there may be the case the absorption peak derived from the resin layer is also observed on the infrared ray absorption spectrum and thus the accurate absorption spectrum of the layer containing the M-O-P bond itself is not obtained. In that case, the infrared ray absorption spectrum of the layer containing the M-O-P bond may be obtained by subtracting the infrared ray absorption spectrum of the resin layer which is additionally measured.

The thickness of the layer containing the M-O-P bond (total of thickness of each layer when the outer covering material includes two or more of the layer containing the M-O-P bond) is not particularly limited if it allows the desired characteristics to be exhibited, but for example, it is preferably 1.0 µm or less, and may be 0.9 µm or less. Also, the down limit of the thickness is preferably 0.1 µm or more, and more preferably 0.2 µm or more.

The other points on the layer containing the M-O-P bond such as a method for forming the layer containing the M-O-P bond may be in the same contents as those disclosed in JP-A No. 2011-226644; thus, the explanations herein are omitted.

### (3) Others

In the outer covering material of the present disclosure, the three gas barrier layers may all be the layer containing the M-O-P bond, may all be the inorganic layer, one may be the layer containing the M-O-P bond and the other two may be the inorganic layer, and one may be the inorganic layer and the other two may be the layer containing the M-O-P bond. Also, when two or more of the layer containing the M-O-P bond are included, each layer may have the same composition, and may have different compositions or kinds. The same applies to the inorganic layer.

In the outer covering material of the present disclosure, at least one of the three gas barrier layers is preferably the inorganic layer. The reason therefor is to improve the gas barrier properties as the outer covering material overall since the inorganic material exhibit excellent gas barrier properties. Above all, the inorganic layer is preferably at least one kind selected from the group consisting of a metal foil and a metal membrane.

Also, in the outer covering material of the present disclosure, at least one of the three gas barrier layers is preferably the layer containing the M-O-P bond described above. The humidity and heat deterioration of components do not easily occur in the layer containing the M-O-P bond compared to the inorganic layer, and the gas barrier properties, particularly water vapor barrier properties are not easily degraded over time. Thus, when the outer covering material of the present disclosure includes the layer containing the M-O-P bond, the gas barrier properties may be maintained for a long period of time in the environment having a high temperature and a high humidity.

When the outer covering material of the present disclosure includes the layer containing the M-O-P bond as the gas barrier layer, the resin layer mainly composed of an EVOH resin is preferably arranged at the first resin layer side of the layer containing the M-O-P bond, and above all, an EVOH resin layer is preferably included. The EVOH resin has extremely low oxygen permeability in an environment having a low humidity and excellent oxygen barrier properties to improve the gas barrier properties of the outer covering material overall, but meanwhile, one of the disadvantages thereof is that the oxygen barrier properties are significantly degraded in an environment having a high humidity. In the outer covering material, when the resin layer mainly composed of the EVOH resin is arranged so as to be at the first resin layer side with respect to the layer containing the M-O-P bond, permeation of water vapor from the fourth resin layer side may be inhibited by the layer containing the M-O-P bond for a long period of time in the environment having a high humidity; thus, the humidity inside the outer covering material may be maintained low. Thereby, the effect of water vapor to the resin layer mainly composed of the EVOH resin may be inhibited and the oxygen barrier properties of the EVOH resin may be maintained even when a vacuum heat insulation material using the outer covering material is kept in the environment having a high humidity for a long period of time.

The resin layer mainly composed of the EVOH resin is arranged at the first resin layer side of the layer containing the M-O-P bond may mean that the first resin layer side surface of the layer containing the M-O-P bond directly contacts with the resin layer mainly composed of the EVOH resin, and may mean that the first resin layer side surface of the layer containing the M-O-P bond contacts with the resin layer mainly composed of the EVOH resin interposing the other layer.

In the outer covering material of the present disclosure, at least one of the three gas barrier layers is the layer containing the M-O-P bond, the gas barrier layers other than the layer containing the M-O-P bond are the inorganic layer, and the inorganic layer is preferably arranged at the first resin layer side with respect to the layer containing the M-O-P bond, and above all, the inorganic layer is preferably at least one kind selected from the group consisting of a metal foil and a metal membrane. The reason therefor is that when the layer containing the M-O-P bond and the inorganic layer are arranged in this order, water vapor permeation from the outside may be inhibited by the layer containing the M-O-P bond, which prevents the water vapor deterioration of the component, particularly the metal element included in the inorganic layer, and as the result, the degrade of the gas barrier properties in the inorganic layer may be inhibited.

Here, "the inorganic layer is arranged at the first resin layer side with respect to the layer containing the M-O-P bond" means that the inorganic layer is in the region between the inorganic layer and the first resin layer. When two layers or more of the layer containing the M-O-P bond are included, it means that the inorganic layer is in the region between the layer containing the M-O-P bond positioned at the furthest from the first resin layer, and the first resin layer, in the thickness direction of the outer covering material of the present disclosure.

For example, when the outer covering material of the present disclosure includes one inorganic layer 21 and two layer containing the M-O-P bond 22a and 22b, as shown in FIG. 6A, first layer containing the M-O-P bond 22a may be arranged between the second resin layer 1B and the third resin layer 1C, and the inorganic layer 21 and second layer containing the M-O-P bond 22b may be arranged between the third resin layer 1C and the fourth resin layer 1D in this order from the third resin layer 1C side. Also, as shown in FIG. 6B, the inorganic layer 21 and the first layer containing the M-O-P bond 22a may be arranged between the second resin layer 1B and the third resin layer 1C in this order from the second resin layer 1B side, and the second layer containing the M-O-P bond 22b may be arranged between the third resin layer 1C and the fourth resin layer 1D.

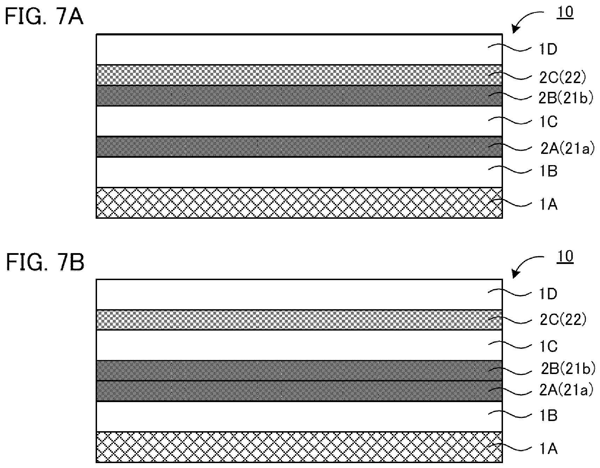

Also, when the outer covering material 10 of the present disclosure includes two of the inorganic layer 21a and 21b, and one of the layer containing the M-O-P bond 22, as shown in FIG. 7A, the first inorganic layer 21a may be arranged between the second resin layer 1B and the third resin layer 1C, and the second inorganic layer 21b and the layer containing the M-O-P bond 22 may be arranged between the third resin layer 1C and the fourth resin layer 1D in this order from the third resin layer 1C side. Also, as shown in FIG. 7B, two inorganic layers 21a and 21b may be arranged between the second resin layer 1B and the third resin layer 1C, and the layer containing the M-O-P bond 22 may be arranged between the third resin layer 1C and the fourth resin layer 1D.

In the outer covering material of the present disclosure, two of the gas barrier layers are preferably arranged between the second resin layer and the third resin layer, and two or more of the gas barrier layers may be arranged there. The reason therefor is that the maintenance of the gas barrier properties may be expected the most when a plurality of the gas barrier layers are arranged between the second resin layer and the third resin layer in the configuration of the present disclosure. In specific, when the gas barrier layer is arranged between the first resin layer and the second resin layer, there is a risk that defects such as cracks may easily occur since the first resin layer melts and flows during heat-sealing which applies shearing pressure to the gas barrier layer. For this reason, it is presumed that the gas barrier properties may be easily degraded in the initial stage. Also, when a plurality of the gas barrier layers are arranged between the third resin layer and the fourth resin layer, there is a risk that the gas barrier layers may be deteriorated by the effect of water vapor since the water vapor permeated from outside must be prevented from passing through with just the fourth resin layer, which is not sufficient prevention of the water vapor permeation. For this reason, it is presumed that the gas barrier properties may be easily degraded in the environment having a high humidity.

To solve the problems, a plurality of the gas barrier layers are arranged between the second resin layer and the third resin layer and thus the gas barrier layers are not easily affected by the shearing stress caused by the melt of the first resin layer. Also, since at least the third resin layer and the fourth resin layer are to be arranged between the gas barrier layer and outside air, the plurality of the resin layers may sufficiently prevent the water vapor permeated from outside from passing through, and the degrade of the gas barrier layer in the gas barrier properties due to the water vapor passing through may be inhibited.

The number of the gas barrier layers to be arranged between the second resin layer and the third resin layer may be confirmed from, for example, the number of the adhesive layer that adheres the gas barrier layers; in specific, when two of the gas barrier layers are arranged between the second resin layer and the third resin layer, there is one adhesive layer that adheres the gas barrier layers. The number of the gas barrier layers arranged between the other two resin layers may be confirmed in the same manner.

The two or more of the gas barrier layers arranged between the second resin layer and the third resin layer may be the same kind and may be different kinds. For example, the two or more of the gas barrier layers arranged between the second resin layer and the third resin layer may all be the layer containing the M-O-P bond, and may all be the inorganic layer. Also, one or more of the layer containing the M-O-P bond and one or more of the inorganic layer may be arranged between the second resin layer and the third resin layer.

Also, at least one or more of the gas barrier layers are arranged between the third resin layer and the fourth resin layer; there may be two or more of the gas barrier layers. When two or more of the gas barrier layers are arranged between the third resin layer and the fourth resin layer, the two or more of the gas barrier layers may be the same kind and may be different kinds.

Incidentally, the gas barrier layer may and may not be arranged between the first resin layer and the second resin layer, but preferably not arranged. As described above, when the gas barrier layer is arranged between the first resin layer and the second resin layer, there is a risk that the defects such as cracks may easily occur since the first resin layer melts and flows during heat-sealing, which applies shearing pressure to the gas barrier layer. Also, there is a risk that the defects in the gas barrier layer may be easily caused when external force such as bent is applied, since the shearing stress works between the first resin layer, which generally has low elasticity and easily stretches, and the second resin layer which has comparatively high elasticity. In this manner, the gas barrier layer between the first resin layer and the second resin layer is in the environment defects easily occur; thus, desired gas barrier properties may not be exhibited in some cases.

The fourth resin layer may and may not include the gas barrier layer at the surface opposite to the surface of the first resin layer side.

### 4. Arbitrary constitution

The outer covering material of the present disclosure may include an adhesive layer between each layer. Incidentally, the adhesive layer is not included in the resin layer. The adhesive layer is a member that adheres each layer and a publicly known adhesive may be used. Also, the adhesive may contain a material such as a silane coupling agent and a metal chelating agent to improve the adhesive force.

When the fourth resin layer includes the gas barrier layer arranged at the surface opposite to the surface of the first resin layer side in the outer covering material of the present disclosure, a protective film is preferably further arranged as a fifth resin layer, on the gas barrier layer. The reason therefor is that the humidity and heat deterioration of the gas barrier layer may be inhibited with the protective film. The protective film may be the same as the resin layer explained in the section "2. Second resin layer, third resin layer, and fourth resin layer". Above all, in the protective film, it is preferable that a polyamide resin such as nylon is 1not used. The reason therefor is as already described.

### 5. Outer covering material for vacuum heat insulation material

The outer covering material of the present disclosure includes at least three gas barrier layers, and may include three or more thereof. Above all, four or more of the gas barrier layers are preferably included, and five or more of the gas barrier layers are more preferably included. Also, the upper limit of the number of the gas barrier layers is not particularly limited, but may be eight or less. Also, the outer covering material of the present disclosure includes at least four resin layers, and may include four or more thereof. Above all, five or more of the resin layers are preferably included, and six or more of the resin layers are more preferably included. Also, the upper limit of the resin layers is not particularly limited, but for example, may be 9 or less.

The layer structure such as the number of the resin layers, the number of the gas barrier layers, and the layering order in the outer covering material of the present disclosure may be appropriately arranged as long as the first characteristic and the second characteristic explained in the section "A. Characteristics" above may be satisfied. The outer covering material of the present disclosure may, for example, include three of the gas barrier layers and five of the resin layers, include four of the gas barrier layers and five of the resin layers, include five of the gas barrier layers and five of the resin layers, and include five of the gas barrier layers and six of the rein layers.

An example of the layer structure of the outer covering material of the present disclosure including three of the gas barrier layers and five of the resin layers may be the layer structure of: the fifth resin layer / the third gas barrier layer // the fourth resin layer / the second gas barrier layer // the third resin layer / the first gas barrier layer // the second resin layer // the first resin layer.

An example of the layer structure of the outer covering material of the present disclosure including four of the gas barrier layers and five of the resin layers may be the layer structure of: the fifth resin layer / the fourth gas barrier layer // the fourth resin layer / the third gas barrier layer // the third resin layer / the second gas barrier layer // the first gas barrier layer / the second resin layer // the first resin layer.

An example of the layer structure of the outer covering material of the present disclosure including five of the gas barrier layers and five of the resin layers may be the layer structure of: the fifth resin layer / the fifth gas barrier layer // the fourth resin layer / the fourth gas barrier layer // the third resin layer / the third gas barrier layer // the second gas barrier layer / the second resin layer // the first gas barrier layer / the first resin layer.

An example of the layer structure of the outer covering material of the present disclosure including five of the gas barrier layers and six of the resin layers may be: the sixth resin layer / the fifth gas barrier layer // the fifth resin layer / the fourth gas barrier layer // the fourth resin layer / the third gas barrier layer // the third resin layer / the second gas barrier layer // the first gas barrier layer / the second resin layer // the first resin layer.

Incidentally, in the above described layer structures, "/" indicates a directly layered interface, and "//" indicates a layered interface interposing an adhesive layer. Also, the above described layer structures are exemplifications and the layering order is not limited thereto.

The thickness of the outer covering material of the present disclosure is not particularly limited if the above described characteristics may be possessed, and may be, for example, within the range of 30 µm or more and 200 µm or less, and preferably within the range of 50 µm or more and 150 µm or less.

There are no particular limitations on the method for producing the outer covering material of the present disclosure; for example, publicly known methods such as a method of pasting each film produced in advance with an adhesive, and a method of extruding the raw material of each film thermally melted by a tool such as a T-die sequentially to obtain a layered body may be used.

The outer covering material of the present disclosure is used for a vacuum heat insulation material. In the outer covering material of the present disclosure, one of the two surfaces opposed to each other in the thickness (layered) direction is a thermally weldable film that is the first resin layer. In the vacuum heat insulation material, usually, a pair of the outer covering materials are arranged so as the first resin layer side surface comes to the core material side and faces to each other interposing the core material.

### II. Vacuum heat insulation material

The vacuum heat insulation material of the present disclosure is a vacuum heat insulation material characterized by comprising: a core material, and an outer covering material for vacuum heat insulation material enclosing the core material; wherein the outer covering material for vacuum heat insulation material is the one explained in the section "I. Outer covering material for vacuum heat insulation material" above.

FIGS. 2A and 2B already explained respectively illustrate an example of the vacuum heat insulation material of the present disclosure. According to the present disclosure, the outer covering material for vacuum heat insulation material is configured by the outer covering material for vacuum heat insulation material explained in the section "I. Outer covering material for vacuum heat insulation material" above, and thus excellent heat insulation performance may be maintained for a long period of time under the environment having a high temperature and a high humidity.

Hereinafter, each constitution of the vacuum heat insulation material of the present disclosure is explained.

### 1. Outer covering material for vacuum heat insulation material

The outer covering material in the present disclosure is a member that encloses a core material, and is the same as the outer covering material explained in the section "I. Outer covering material for vacuum heat insulation material" above; thus, the explanations herein are omitted. Incidentally, enclosing means sealing inside the bag body formed of the outer covering materials.

### 2. Core material

The core material in the present disclosure is a member that is enclosed in the outer covering material for vacuum heat insulation material. The core material preferably has low heat conductivity. Also, the core material is preferably a porous material of which void is 50% or more, particularly 90% or more.

As the material configuring the core material, a material such as a powder body, a foam body, and a fiber body may be used.

The powder body may be inorganic and may be organic; for example, a material such as dry silica, wet silica, condensed silica powder, a conductive powder body, a calcium carbonate powder, perlite, cray, and talc may be used. Above all, the mixture of dry silica and a conductive powder body is advantageous on the occasion of using thereof in the temperature range where inner pressure rise is caused, since the degrade of the heat insulation performance along with the inner pressure rise of the vacuum heat insulation material is small. Further, addition of a material having small infrared ray absorption rate such as a titanium oxide, an aluminum oxide, and indium-doped tin oxide to the above described material as a radiation inhibitor may reduce the infrared ray absorption rate of the core material.

As the foam body, a material such as urethane foam, styrene foam, and phenol foam may be used. Above all, a foam body forming continuous foam is preferable.

The fiber body may be inorganic fiber and may be organic fiber, but inorganic fiber is preferably used from the viewpoint of heat insulation performance. Examples of the inorganic fiber may include glass fiber such as glass wool and glass fiber, alumina fiber, silica alumina fiber, silica fiber, ceramic fiber, and rock wool. These inorganic fibers are preferable on the point that they have low heat conductivity and are more easily handled compared to powder bodies.

As the core material, the above described material may be used singly, and two kinds or more of the materials may be mixed to form a composite material.

### 3. Vacuum heat insulation material

The vacuum heat insulation material of the present disclosure is in a vacuum state in which the core material is enclosed inside the outer covering material and the pressure inside is decompressed. The vacuum degree inside the vacuum heat insulation material is, for example, preferably 5 Pa or less. The reason therefor is to lower the heat conduction due to the convection of air remained inside so as to exhibit excellent heat insulation performance.

The lower the heat conductivity of the vacuum heat insulation material is, the more preferable; for example, the heat conductivity (initial heat conductivity) is preferably 5 mW/(mK) or less. The reason therefor is not to easily conduct heat by the vacuum heat insulation material to outside so as to exhibit high heat insulation effect. Above all, the initial heat conductivity is more preferably 4 mW/(mK) or less, and further preferably 3 mW/(mK) or less.

The heat conductivity may be the value measured by a heat flow meter method using a heat conductivity measurement device in accordance with JIS A1412-2: 1999 (Measurement method of heat resistance and heat conductivity of heat insulation material- Section 2: Heat flow meter method (HFM method). As the heat conductivity measurement device, for example, a heat conductivity measurement device Auto Λ (product name: HC-074 from EIKO Instruments) may be used. The measurement is carried out by arranging the both main surfaces of a measurement sample (vacuum heat insulation material) faces upward and downward directions, with the below conditions. It is preferable to confirm if the temperature of the measurement sample and the temperature of measurement environment are equal in advance using a tool such as a heat flow meter before the heat conductivity measurement. In one condition, at least 3 pieces of the sample are measured, and the average of these measured values is regarded as the value of the heat conductivity in that condition.

### <Conditions for measuring heat conductivity>

- Measurement sample: width of 29 cm ± 0.5 cm and length of 30 cm ± 0.5 cm
- Time required for steady test: 15 minutes or more
- Kind of standard plate: EPS
- Temperature of high temperature surface: 30°C
- Temperature of low temperature surface: 10°C
- Average temperature of measurement sample: 20°C

### 4. Others

As the method for producing the vacuum heat insulation material of the present disclosure, a general method may be used. For example, two pieces of the outer covering material are prepared and overlapped so that each thermally weldable film faces to each other, and three sides of the outer periphery are thermally welded to obtain a bag body of which one side opens. After inserting a core material to the bag body from the opening, the air is sucked from the opening and the opening is sealed when inside the bag body is in a decompressed state; thereby, a vacuum heat insulation material may be obtained.

The vacuum heat insulation material of the present disclosure may be used in, for example, an article that requires thermal insulation. The article is described later.

### III. Article provided with vacuum heat insulation material

The article provided with vacuum heat insulation material of the present disclosure is an article provided with vacuum heat insulation material characterized by comprising: an article including a thermal insulation region, and a vacuum heat insulation material; wherein the vacuum heat insulation material includes a core material, and an outer covering material for vacuum heat insulation material enclosing the core material; and the outer covering material for vacuum heat insulation material is the one explained in the section "I. Outer covering material for vacuum heat insulation material" above.

According to the present disclosure, the vacuum heat insulation material used in the article is configured by the outer covering material explained in the section "I. Outer covering material for vacuum heat insulation material", which is capable of exhibiting excellent heat insulation performance for a long period of time under the environment having a high temperature and a high humidity; thus, energy conservation of the article to be in the environment having a high temperature and a high humidity and of a target material wherein the article is used may be achieved.

The vacuum heat insulation material in the present disclosure and the outer covering material used therefor are explained in details in the sections "II. Vacuum heat insulation material" and "I. Outer covering material for vacuum heat insulation material" above; thus, the explanations herein are omitted.

The article in the present disclosure includes a thermal insulation region. Here, the thermal insulation region is a region thermally insulated by the vacuum heat insulation material, which is, for example, a region warmed or cooled, a region surrounding a heating source and a cooling source, and a region isolated from the heating source and the cooling source. These regions may be space and may be substance. Examples of the article may include electronic devices such as a refrigerator, a freezer, a heat-keeping device, and a cool-keeping device, containers such as a heat-keeping container, a cool-keeping container, a container for transportation, a container, and a storing container, conveyance for transporting such as a vehicle, an airplane, and a vessel, buildings such as a house and a storehouse, and construction materials such as a wall material and a floor material.

### Examples

The present disclosure is hereinafter explained in further details with reference to Examples and Comparative Examples.

### <Materials>

Each film used for producing the outer covering material for vacuum heat insulation material is shown below and in Table 1. Incidentally, "/" in the structures of the gas barrier layer A and G in Table 1 indicates a layered interface.

- Gas barrier film A: a vapor deposition film provided with an overcoat layer (OC layer), the OC layer being a polyvinylalcohol-tetraethoxysilane-based (PVA-TEOS-based) overcoat layer having the thickness of 200 nm formed by the below method on a silicon oxide (SiO₂) membrane, which is provided as deposited on a PET film (thickness: 12 µm, TECHBARRIER^{™} LX from Mitsubishi Plastics, Inc.);
- Gas barrier film B: an ethylene-vinylalcohol copolymer (EVOH) film (thickness: 15 µm) on one of which surface an aluminum (Al) membrane is deposited;
- Gas barrier film C: an EVOH film (thickness: 12 µm) on one of which surface an aluminum (Al) membrane is deposited;
- Gas barrier film D: a PET film (thickness: 12 µm) on one of which surface an aluminum (Al) membrane is deposited;
- Gas barrier film E: a PET film (thickness: 12 µm) on one of which surface an aluminum (Al) membrane is deposited;
- Gas barrier film F: a PET film (thickness: 12 µm) on one of which surface the layer containing the M-O-P bond (M = aluminum) is arranged;
- Gas barrier film G: a vapor deposition film wherein an aluminum (Al) membrane is deposited on one surface of a PET film (thickness: 12 µm, P60 from Toray Advanced Film Co., Ltd.);
- Gas barrier film H: a PET film (thickness: 12 µm) on one of which surface a SiO₂ membrane is deposited;
- Gas barrier film I: a nylon film (thickness: 15 µm) on one of which surface a SiO₂ membrane is deposited;
- Thermally weldable film A: an unstretched polypropylene film (thickness: 50 µm);
- Thermally weldable film B: a straight chain-shaped short chain branched polyethylene film (thickness: 50 µm);
- Protective film A: a nylon film (thickness: 25 µm).

**[Table 1]**

| Structural members of Outer covering material | Structure: Product name abbreviation (manufacturer's name) | Constitution (excluding overcoat layer) | |
|---|---|---|---|
| | | Resin laver | Gas barrier layer |
| Gas barrier film A | PVA-TEOS-based overcoat layer (trial product)/TECHBARRIER LX (from Mitsubishi Plastics Inc.) | PET | SiO₂ membrane deposited |
| Gas barrier film B | TMXL (from KURARAY CO., LTD.) | EVOH | Al membrane deposited |
| Gas barrier film C | VMXL (from KURARAY CO., LTD.) | EVOH | Al membrane deposited |
| Gas barrier film D | VM-PET1519 (from TORAY ADVANCED FILM CO., LTD.) | PET | Al membrane deposited |
| Gas barrier film E | VM-PET1510 (from TORAY ADVANCED FILM CO., LTD.) | PET | Al membrane deposited |
| Gas barrier film F | KURARISTER CF (from KURARAY CO., LTD.) | PET | Layer containing M-O-P bond |
| Gas barrier film G | VM-PET (trial product)/P60 (from TORAY ADVANCED FILM CO., LTD.) | PET | Al membrane deposited |
| Gas barrier film H | IB-PET-UB (from DAI NIPPON PRINTING CO., LTD.) | PET | SiO₂ membrane deposited |
| Gas barrier film I | IB-ON-UB (from DAI NIPPON PRINTING CO., LTD.) | Nylon | SiO₂ vapor deposition |
| Thermally weldable film A | CPP50 (from TORAY ADVANCED FILM CO., LTD.) | PP | |
| Thermally weldable film B | LLDPE50 (from Mitsui Chemicals Tohcello, Inc.) | PE | |
| Protective film A | ONBC (from Unitika Limited) | Nylon | |

### <Confirmation of M-O-P bond in Gas barrier film F>

The infrared ray absorption spectrum of the gas barrier film F was measured in the measurement wave number region of 800 cm⁻¹ or more and 1400 cm⁻¹ or less using a Fourier transform-type infrared spectrophotometer (FTS7000 from Varian Inc.) with a total reflection measurement method (ATR method). The measurement was carried out in accordance with the details of the method for confirming the M-O-P bond explained in the section "I. Outer covering material for vacuum heat insulation material". The spectrum data is shown in FIG. 5. From FIG. 5, it was confirmed that the maximum wave number of the infrared ray absorption peak (n¹) was within the range of 1080 cm⁻¹ or more and 1130 cm⁻¹ or less. Accordingly, it was confirmed that the layer arranged on one surface side of the polyethylene terephthalate (PET) film in the gas barrier film F was the layer containing the M-O-P bond.

### <Method for forming PVA-TEOS-based OC layer in Gas barrier film A>

B solution (a hydrolyzed solution comprising tetraethoxy silane (TEOS), isopropyl alcohol, hydrochloric acid, and ion exchanged water) prepared in advanced in accordance with the composition shown in Table 1 was added to A solution (a mixture solution comprising polyvinyl alcohol, isopropyl alcohol, and water) prepared in accordance with the composition shown in below Table 2, and stirred by a sol-gel method to obtain a colorless and transparent composition for barrier coating membrane.

**[Table 2]**

| Composition of composition for barrier coating membrane | | |
|---|---|---|
| A solution | Polyvinyl alcohol | 1.81 |
| | Isopropyl alcohol | 39.8 |
| | H₂O | 2.09 |
| B solution | TEOS | 21.49 |
| | Isopropyl alcohol | 5.03 |
| | 0.5N hydrochloric acid solution | 0.69 |
| | H₂O | 29.1 |
| Total | | 100 (wt%) |

The composition for barrier coating membrane was coated on the SiO₂ membrane in TECHBARRIER^{™} LX using a gravure coating method, and then the product was heat-treated respectively at 120°C, 140°C, and 150°C for 20 seconds each to form a barrier coating membrane having the thickness of 200 nm, and aged at 55°C for one week to obtain a PVA-TEOS-based OC layer that was a mixture compound layer containing a Si element, an O element, and a PVA resin.

### [Example 1] <Production of outer covering material for vacuum heat insulation material>

Obtained was an outer covering material including the thermally weldable film A as the first layer, the gas barrier film B as the second layer, the gas barrier film A as the third layer, and the gas barrier film A as the fourth layer, in this order.

In the outer covering material for Example 1, the first resin layer was the thermally weldable film A, the second resin layer was the gas barrier film B, which was the EVOH film, the third resin layer was the gas barrier film A, which was the PET film as the third layer, and the fourth resin layer was the gas barrier film A, which was the PET film as the fourth layer. The gas barrier film B as the second layer was arranged so that the Al membrane faced to the third layer side, the gas barrier film A as the third layer was arranged so that the SiO₂ membrane faced to the second layer side, and the gas barrier film A as the fourth layer was arranged so that the SiO₂ membrane faced to the third layer side.

Each film was adhered with an adhesive layer. Used as the adhesive for forming the adhesive layer was 2-liquid curing type adhesive wherein a main agent mainly composed of polyester polyol (product name: RU-77T, from ROCK PAINT CO., LTD), a curing agent including aliphatic polyisocyanate (product name: H-7 from ROCK PAINT CO., LTD), and a solution of ethyl acetate were mixed in the weight blending ratio of the main agent: the curing agent: the solution = 10 : 1 : 14. The above described adhesive was pasted on one surface of the film which would be outer side, in the pasting amount of 3.5 g/m² to form the adhesive layer, the adhesive layer was placed between a film for outer side of the formed adhesive layer and a film for inner side thereof, and pressurized.

### <Production of vacuum heat insulation material>

Two pieces of the outer covering material (size: 360 mm * 450 mm) obtained in Example 1 were prepared and overlapped so that each of the thermally weldable film faces to each other, and the three sides of tetragon were heat-sealed to form a bag body of which just one side was open. Glass wool in the size of 290 mm * 300 mm * 30 mm was used as a core material, and a drying treatment was carried out thereto, and after that, the core material and 5 g of calcium oxide as a drying agent were stored in the bag body, and the air inside the bag body was ejected. After that, the opening part of the bag body was sealed by heat-sealing to obtain a vacuum heat insulation material. The ultimate pressure was 0.05 Pa.

[Example 2] An outer covering material including the thermally weldable film A as the first layer, the gas barrier film B as the second layer, the gas barrier film D as the third layer, and the gas barrier film A as the fourth layer in this order was obtained in the same manner as in Example 1.

In the outer covering material for Example 2, the first resin layer was the thermally weldable film A, the second resin layer was the gas barrier film B, which was the EVOH film, the third resin layer was the gas barrier film D, which was the PET film as the third layer, and the fourth resin layer was the gas barrier film A, which was the PET film as the fourth layer. The gas barrier film B as the second layer was arranged so that the AI membrane faced to the third layer side, the gas barrier film D as the third layer was arranged so that the AI membrane faced to the second layer side, and the gas barrier film A as the fourth layer was arranged so that the SiO₂ membrane faced to the third layer side. Also, a vacuum heat insulation material was obtained in the same manner as in Example 1.

[Example 3] An outer covering material including the thermally weldable film B as the first layer, the gas barrier film B as the second layer, the gas barrier film F as the third layer, and the gas barrier film F as the fourth layer in this order was obtained in the same manner as in Example 1.

In the outer covering material for Example 3, the first resin layer was the thermally weldable film B, the second resin layer was the gas barrier film B, which was the EVOH film, the third resin layer was the gas barrier film F, which was the PET film as the third layer, and the fourth resin layer was the gas barrier film F, which was the PET film as the third layer. The gas barrier film B as the second layer was arranged so that the AI membrane faced to the third layer side, the gas barrier film F as the third layer was arranged so that the layer containing the M-OP bond faced to the second layer side, and the gas barrier film F as the fourth layer was arranged so that the layer containing the M-O-P bond faced to the third layer side. Also, a vacuum heat insulation material was obtained in the same manner as in Example 1.

[Example 4] An outer covering material including the thermally weldable film B as the first layer, the gas barrier film C as the second layer, the gas barrier film D as the third layer, and the gas barrier film F as the fourth layer in this order was obtained in the same manner as in Example 1.

In the outer covering material for Example 4, the first resin layer was the thermally weldable film B, the second resin layer was the gas barrier film C, which was the EVOH film, the third resin layer was the gas barrier film D as the third layer, which was the PET film, and the fourth resin layer was the gas barrier film F as the fourth layer, which was the PET film. The gas barrier film C as the second layer was arranged so that the AI membrane faced to the third layer side, the gas barrier film D as the third layer was arranged so that the AI membrane layer faced to the second layer side, and the gas barrier film F as the fourth layer was arranged so that the layer containing the M-O-P bond faced to the third layer side.

[Example 5] An outer covering material including the thermally weldable film C as the first layer, the gas barrier film C as the second layer, the gas barrier film H as the third layer, and the gas barrier film F as the fourth layer in this order was obtained in the same manner as in Example 1.

In the outer covering material for Example 5, the first resin layer was the thermally weldable film C, the second resin layer was the gas barrier film C, which was the EVOH film, the third resin layer was the gas barrier film H as the third layer, which was the PET film, and the fourth resin layer was the gas barrier film F as the fourth layer, which was the PET film. The gas barrier film C as the second layer was arranged so that the AI membrane faced to the third layer side, the gas barrier film H as the third layer was arranged so that the SiO₂ membrane faced to the second layer side, and the gas barrier film F as the fourth layer was arranged so that the layer containing the M-O-P bond faced to the third layer side. Also, a vacuum heat insulation material was obtained in the same manner as in Example 1.

[Comparative Example 1] An outer covering material including the thermally weldable film B as the first layer, the gas barrier film C as the second layer, the gas barrier film E as the third layer, and the protective film A as the fourth layer in this order was obtained in the same manner as in Example 1.

In the outer covering material for Comparative Example 1, the first resin layer was the thermally weldable film B, the second resin layer was the gas barrier film C, which was the EVOH film, the third resin layer was the gas barrier film E as the third layer, which was the PET film, and the fourth resin layer was the protective film A as the fourth layer. The gas barrier film C as the second layer was arranged so that the AI membrane faced to the third layer side, and the gas barrier film E as the third layer was arranged so that the AI membrane layer faced to the second layer side. Also, a vacuum heat insulation material was obtained in the same manner as in Example 1.

[Comparative Example 2] An outer covering material including the thermally weldable film B as the first layer, the gas barrier film B as the second layer, the gas barrier film F as the third layer, and the gas barrier film I as the fourth layer in this order was obtained in the same manner as in Example 1.

In the outer covering material for Comparative Example 2, the first resin layer was the thermally weldable film B, the second resin layer was the gas barrier film B, which was the EVOH film, the third resin layer was the gas barrier film F as the third layer, which was the PET film, and the fourth resin layer was the gas barrier film I as the fourth layer, which was the nylon film. The gas barrier film B as the second layer was arranged so that the AI membrane faced to the third layer side, and the gas barrier film F as the third layer was arranged so that the layer containing the M-O-P bond faced to the second layer side. The gas barrier film I as the fourth layer was arranged so that the SiO₂ membrane faced to the third layer side. Also, a vacuum heat insulation material was obtained in the same manner as in Example 1.

[Comparative Example 3] An outer covering material including the thermally weldable film B as the first layer, the gas barrier film G as the second layer, the gas barrier film G as the third layer, and the gas barrier film G as the fourth layer in this order was obtained in the same manner as in Example 1.

In the outer covering material for Comparative Example 3, the first resin layer was the thermally weldable film B, the second resin layer was the gas barrier film G, which was the PET film, the third resin layer was the gas barrier film G as the third layer, which was the PET film, and the fourth resin layer was the gas barrier film G as the fourth layer, which was the PET film. Also, the gas barrier film G as the second layer was arranged so that the AI membrane faced to the third layer side, the gas barrier film G as the third layer was arranged so that the AI membrane faced to the second layer side, and the gas barrier film G as the fourth layer was arranged so that the AI membrane faced to the third layer side. Also, a vacuum heat insulation material was obtained in the same manner as in Example 1.

The layer structure of each of the outer covering material for Examples 1 to 5 and Comparative Examples 1 to 3 is shown in Table 3. Incidentally, in Table 3, the left column in bottom row for each gas barrier film indicates the layer (membrane) positioned at the first layer (first resin layer) side among the layers (membranes) configured in the gas barrier film.

**[Table 3]**

| | First layer | Second layer (left column in bottom row is the first layer side) | | Third layer (left column in bottom row is the first layer side) | | Fourth layer (left column in bottom row is the first layer side) | | Presence or absence of layer containing M-O-P bond |
|---|---|---|---|---|---|---|---|---|
| Example 1 | Thermally weldable film A | Gas barrier film B | | Gas barrier film A | | Gas barrier film A | | Absent |
| | | EVOH | AI membrane | SiO₂ membrane | I PET | SiO₂ membrane | PET | |
| Example 2 | Thermally weldable film A | Gas barrier film B | | Gas barier film D | | Gas barrier film A | | Absent |
| | | EVOH | AI membrane | AI membrane | PET | SiO₂ membrane | PET | |
| Example 3 | Thermally weldable film B | Gas barrier film B | | Gas barrier film F | | Gas barrier film F | | Present |
| | | EVOH | AI membrane | Layer containing M-O-P bond I PET | | Layer containing M-O-P bond | PET | |
| Example 4 | Thermally weldable film B | Gas barrier film C | | Gas barier film D | | Gas barrier film F | | Present |
| | | EVOH | AI membrane | AI membrane | PET | Layer containing M-O-P bond | PET | |
| Example 5 | Thermally weldable film C | Gas barrier film C | | Gas barrier film H | | Gas barrier film F | | Present |
| | | EVOH | AI membrane | SiO₂ membrane | PET | Layer containing M-O-P bond | PET | |
| Comp. Example 1 | Thermally weldable film B | Gas barrier film C | | Gas barrier film E | | Protective film A | | Absent |
| | | EVOH | AI membrane | AI membrane | PET | | | |
| Comp. Example 2 | Thermally weldable film B | Gas barrier film B | | Gas barrier film F | | Gas barrier film I | | Present |
| | | EVOH | AI membrane | Layer containing M-O-P bond | PET | SiO₂ membrane | Nylon | |
| Comp. Example 3 | Thermally weldable film B | Gas barrier film G | | Gas barrier film G | | Gas barrier film G | | Absent |
| | | PET | AI membrane | AI membrane | PET | AI membrane | PET | |

[Evaluation 1: Tensile storage elastic modulus of outer covering material for vacuum heat insulation material] Regarding each of the outer covering material obtained in Examples 1 to 5 and Comparative Examples 1 to 3, the "initial tensile storage elastic modulus", which was the tensile storage elastic modulus after being kept for 15 minutes in the atmosphere having a temperature of 30°C and a humidity of 30%RH (point A in FIG. 3), and the "tensile storage elastic modulus in the atmosphere having a high temperature and a high humidity", which was the tensile storage elastic modulus after being kept for 10 minutes in the atmosphere having a temperature of 70°C and a humidity of 90%RH (point C in FIG. 3) were respectively measured by a tensile method using a dynamic viscoelasticity measurement device. Each of the tensile storage elastic modulus was the average value of the tensile storage elastic modulus of 8 measurement sample pieces collected from a test piece which was a cut-out from the outer covering material. The method for collecting the measurement sample, the steps of raising temperature and raising humidity, an method and conditions for measuring the tensile storage elastic modulus at each point were in the same contents as those explained in the section "I. Outer covering material for vacuum heat insulation material A. Characteristics 1. First characteristic". Also, the ratio of the tensile storage elastic modulus in the atmosphere having a temperature of 70°C and a humidity of 90%RH to the tensile storage elastic modulus in the atmosphere having a temperature of 30°C and a humidity of 30%RH was obtained from the calculation formula explained in the section "I. Outer covering material for vacuum heat insulation material A. Characteristics 1. First characteristic". The result is shown in Table 4. Incidentally, in the table, "E + 08" and "E + 09" respectively means "* 10⁸" and "* 10⁹".

[Evaluation 2: Indentation elastic modulus of each resin layer in outer covering material for vacuum heat insulation material] Regarding each of the outer covering material obtained in Examples 1 to 5 and Comparative Examples 1 to 3, the indentation elastic modulus of each resin layer from the first to the fourth resin layer was measured by a method according to ISO 14577:2015. As the method and conditions for the measurement, the method and conditions for the measurement explained in the section "I. Outer covering material for vacuum heat insulation material A. Characteristics 2. Second characteristic" were used. Regarding each of the outer covering material, the indentation elastic modulus of the gas barrier films A to I and the protective film A were measured by pushing an indenter into the cross-section of the outer covering material. Also, regarding each of the outer covering material, the indentation elastic modulus of the thermally weldable films A to B were measured by pushing an indenter into the surface of the outer covering material. The measurement was carried out to five different points in one outer covering material, and the average of the measured values was regarded as the value of the indentation elastic modulus in that condition.

[Evaluation 3: Water vapor permeability of outer covering material for vacuum heat insulation material] Regarding each of the outer covering material obtained in Examples 1 to 5 and Comparative Examples 1 to 3, the water vapor permeability initially and after being kept for 1000 hours in the atmosphere having a temperature of 70°C and a humidity of 90%RH (after being kept at a high temperature and a high humidity) were measured. The water vapor permeability of the outer covering material initially and after being kept at a high temperature and a high humidity were measured according to the method and conditions explained in the section "I. Outer covering material for vacuum heat insulation material A. Characteristics 3. Other characteristics" above. The results are shown in Table 4. Incidentally, in the table, "E - 01", "E - 02", and "E - 03" respectively means "* 10⁻¹", "* 10⁻²", and "* 10⁻³".

[Evaluation 4: Heat conductivity of vacuum heat insulation material] Regarding each of the vacuum heat insulation material obtained in Examples 1 to 5 and Comparative Examples 1 to 3, the heat conductivity initially and after being kept for 30 days in the atmosphere having a temperature of 70°C and a humidity of 90%RH (after being kept at a high temperature and a high humidity) were measured. The heat conductivity of the outer covering material initially and after being kept at a high temperature and a high humidity were measured according to the method and conditions explained in the section "ll. Vacuum heat insulation material" above. The results are shown in Table 4.

**[Table 4]**

| | Water vapor permeability [cc/(m²·day·atm)] | | Heat conductivity [W/mK] | | Tensile storage elastic modulus E' (Pa) | | | Indentation elastic modulus (Pa) | | | |
|---|---|---|---|---|---|---|---|---|---|---|---|
| | Initial | After 1000h at 10°C90%RH | Initial | After 30days at 10°C90%RH | After 15min at 30°C30%RH | After 10min at 10°C90%RH | Rate before and after kept at high temperature and high humididty (%) | First resin layer | Second resin layer | Third resin layer | Fourth resin layer |
| Example 1 | 3.9E-03 | 0.08 | 3.1 | 14.6 | 2.0E+09 | 1.1E+09 | 56.8 | 0.9 | 1.8 | 2.5 | 2.9 |
| Example 2 | 2.8E-03 | 0.10 | 3.0 | 12.1 | 2.1 E+09 | 1.2E+09 | 55.6 | 0.9 | 1.8 | 2.5 | 2.9 |
| Example 3 | 2.1E-03 | 0.05 | 3.2 | 8.0 | 2.2E+09 | 1.3E+09 | 61.3 | 0.6 | 1.8 | 3.3 | 3.3 |
| Example 4 | 9.8E-03 | 0.10 | 3.2 | 8.1 | 2.4E+09 | 1.4E+09 | 57.5 | 0.6 | 1.8 | 2.5 | 3.3 |
| Example 5 | 6.5E-03 | 0.08 | 3.1 | 8.0 | 2.0E+09 | 1.1E+09 | 56.6 | 0.6 | 1.8 | 2.9 | 3.3 |
| Comp. Example 1 | 2.5E-01 | 4.91 | 3.3 | 22.9 | 2.0E+09 | 6.6E+08 | 33.7 | 0.6 | 1.8 | 2.5 | 1.8 |
| Comp. Example 2 | 1.1E-02 | 0.17 | 3.3 | 19.5 | 2.1 E+09 | 8.1E+08 | 38.7 | 0.6 | 1.8 | 3.3 | 1.9 |
| Comp. Example 3 | 7.4E-03 | 0.14 | 2.9 | 19.6 | 2.2E+09 | 1.6E+09 | 74.1 | 0.6 | 3.0 | 3.0 | 3.0 |

[Consideration] Regarding each of the outer covering material for Examples 1 to 5, the tensile storage elastic modulus in the atmosphere having a high temperature and a high humidity was in the specific range, and also, the indentation elastic modulus of each of the first to the fourth resin layer showed the order of the first resin layer ≤ the second resin layer ≤ the third resin layer ≤ the fourth resin layer, and it was confirmed that the gas barrier properties of each of the outer covering material for Examples 1 to 5 was maintained even in the condition of high temperature and high humidity. Also, it was confirmed that the rise in heat conductivity after being kept at a high temperature and a high humidity was suppressed in the vacuum heat insulation material using each of these outer covering materials.

On the other hand, regarding each of the outer covering material for Comparative Examples 1 and 2, the tensile storage elastic modulus in the atmosphere having a high temperature and a high humidity was below the down limit of the specific range, and also, the indentation elastic modulus of each of the first to the fourth resin layer did not show the order of the first resin layer ≤ the second resin layer ≤ the third resin layer ≤ the fourth resin layer. For these reasons, the vacuum heat insulation material using each of the outer covering material for Comparative Examples 1 and 2 resulted in having large rise in the heat conductivity after being kept at a high temperature and a high humidity. It was assumed that defects were generated in the gas barrier layer to increase the amount of gas infiltrated into the vacuum heat insulation material, since the storage elastic modulus in the condition of high temperature and high humidity was low and strain under a certain stress was increased.

Also, regarding the outer covering material for Comparative Example 3, although the indentation elastic modulus of each of the first to the fourth resin layer showed the order of the first resin layer ≤ the second resin layer ≤ the third resin layer ≤ the fourth resin layer, the tensile storage elastic modulus in the atmosphere having a high temperature and a high humidity exceeded the upper limit of the specific range, and the rate of the tensile elastic modulus was also high. For these reasons, the vacuum heat insulation material using the outer covering material for Comparative Example 3 resulted in having large rise in the heat conductivity after being kept at a high temperature and a high humidity. It was assumed that defects were generated in the gas barrier layer to increase the amount of gas infiltrated into the vacuum heat insulation material, since the storage elastic modulus in the condition of high temperature and high humidity of the Comparative Example 3 was large and the stress worked to the outer covering material at a certain bent part included in the vacuum heat insulation material increased.

### Reference Signs List

1 resin layer
1A first resin layer (thermally weldable film)
1B second resin layer
1C third resin layer
1D fourth resin layer
2A, 2B, 2C gas barrier layer
21a, 21b inorganic layer
22a, 22b layer containing M-O-P bond
10 outer covering material for vacuum heat insulation material
11 core material
20 vacuum heat insulation material

## Claims

1. An outer covering material for vacuum heat insulation material **characterized by** comprising:
at least four resin layers, namely, a first resin layer, a second resin layer, a third resin layer, and a fourth resin layer, and
at least three gas barrier layers, and wherein:
the first resin layer is a thermally weldable film;
at least one or more of the gas barrier layers are arranged between the second resin layer and the third resin layer;
at least one or more of the gas barrier layers are arranged between the third resin layer and the fourth resin layer;
a tensile storage elastic modulus in an atmosphere having a temperature of 70°C and a humidity of 90%RH is within the range of 1.0 * 10⁹ Pa or more and 1.5 * 10⁹ Pa or less, wherein the tensile storage elastic modulus is measured as described in steps (a) to (c) below:
a) a desired size of test piece Q is cut out from the outer covering material, and 8 pieces of radical measurement samples S from one test piece Q, making a reference point P as the center, are collected as follows:
i. in a surface of the test piece Q, the reference point P, and a reference axis L that extends from the reference point P as a starting point to an arbitrary one direction X in the surface, are determined;
ii. the reference axis L is rotated per 22.5° making the center of rotation as the reference point P;
iii. on the reference axis L at each position, a measurement sample is collected so as the one direction X of the reference axis L becomes a longitudinal direction of the measurement sample;
b) the tensile storage elastic modulus in the atmosphere having a temperature of 70°C and a humidity of 90%RH is determined as an average value of the 8 pieces of measurement samples measured in the following manner:
each of the collected 8 pieces of measurement samples S are installed to a chuck so as the tensile direction is in the longitudinal direction of the measurement sample and, in the below conditions, placed in the series of steps:
i. keeping the samples in the atmosphere having a temperature of 30°C and a humidity of 30%RH for 15 minutes;
ii. then the temperature is raised to 70°C at the temperature rising speed of 5°C/minute in the constant humidity;
iii. keeping the samples in the atmosphere having the temperature of 70°C and the humidity of 30%RH for 10 minutes; and,
iv. the humidity is raised to 90% at the humidity raising speed of 5%RH/minute in the constant temperature, and
v. then the samples are kept in the atmosphere having a temperature of 70°C and a humidity of 90%RH for 10 minutes to measure the values;
c) the measurement is carried out with reference to JIS K 7244-4:1999 by a tensile method using the dynamic viscoelasticity measurement device under the following conditions:
i. Measurement sample: square shape in 20 mm in the longitudinal direction * 5 mm in the short direction;
ii. Length of measurement sample between chucks: 15 mm
iii. Measurement mode: sine-wave distortion tensile mode;
iv. Frequency: 10 Hz;
v. Static load: 29.09 cN to 93.87 cN;
vi. Amount of strain: 7.04 µm to 7.53 µm;
vii. Static/dynamic power ratio: 1.5;
an indentation elastic modulus of the second resin layer is not less than an indentation elastic modulus of the first resin layer;
an indentation elastic modulus of the third resin layer is not less than the indentation elastic modulus of the second resin layer; and
an indentation elastic modulus of the fourth resin layer is not less than the indentation elastic modulus of the third resin layer;
wherein the indentation elastic modulus of a resin layer is measured using an ultra-micro load hardness testing machine by the method in accordance with ISO 14577:2015.

2. The outer covering material for vacuum heat insulation material according to claim 1, **characterized in that** a ratio of the tensile storage elastic modulus in the atmosphere having a temperature of 70°C and a humidity of 90%RH with respect to the tensile storage elastic modulus in an atmosphere having a temperature of 30°C and a humidity of 90%RH is within the range of 40% or more and 70% or less.

3. The outer covering material for vacuum heat insulation material according to claim 1 or 2, **characterized in that** two of the gas barrier layers are arranged between the second resin layer and the third resin layer.

4. The outer covering material for vacuum heat insulation material according to claim 1 or 2, **characterized in that** at least one out of three of the gas barrier layers is a layer that contains at least a M-O-P bond (herein, M represents an inorganic atom, O represents an oxygen atom, and P represents a phosphorus atom).

5. The outer covering material for vacuum heat insulation material according to claim 1 or 2, **characterized in that** at least one out of three of the gas barrier layers is an inorganic layer.

6. A vacuum heat insulation material **characterized by** comprising: a core material, and an outer covering material for vacuum heat insulation material enclosing the core material; wherein
the outer covering material for vacuum heat insulation material is the outer covering material for vacuum heat insulation material according to claim 1 or 2.

7. An article provided with vacuum heat insulation material **characterized by** comprising: an article including a thermal insulation region, and a vacuum heat insulation material; wherein
the vacuum heat insulation material includes a core material, and an outer covering material for vacuum heat insulation material enclosing the core material; and
the outer covering material for vacuum heat insulation material is the outer covering material for vacuum heat insulation material according to claim 1 or 2.

## Patentansprüche

1. Äußeres Abdeckmaterial für Vakuumwärmedämmstoff, **dadurch gekennzeichnet, dass** es Folgendes umfasst:
mindestens vier Harzschichten, nämlich eine erste Harzschicht, eine zweite Harzschicht, eine dritte Harzschicht und eine vierte Harzschicht, und
mindestens drei Gassperrschichten, und wobei:
die erste Harzschicht eine thermisch schweißbare Folie ist;
wobei mindestens eine oder mehrere der Gassperrschichten zwischen der zweiten Harzschicht und der dritten Harzschicht angeordnet sind;
wobei mindestens eine oder mehrere der Gassperrschichten zwischen der dritten Harzschicht und der vierten Harzschicht angeordnet sind;
wobei ein Zug-Speicher-Elastizitätsmodul in einer Atmosphäre mit einer Temperatur von 70 °C und einer Luftfeuchtigkeit von 90 % relativer Luftfeuchtigkeit innerhalb des Bereichs von 1,0 * 10⁹ Pa oder mehr und 1,5 * 10⁹ Pa oder weniger liegt, wobei
der Zug-Speicher-Elastizitätsmodul wie in den Schritten (a) bis (c) unten beschrieben gemessen wird:
a) aus dem äußeren Abdeckmaterial wird ein Prüfstück Q in der gewünschten Größe herausgeschnitten, und aus einem Prüfstück Q werden 8 Stücke von Radikalmessproben S mit einem Referenzpunkt P als Mittelpunkt wie folgt entnommen:
i. auf einer Fläche des Probestücks Q werden der Referenzpunkt P und eine Referenzachse L, die sich von dem Referenzpunkt P als Ausgangspunkt in eine beliebige Richtung X auf der Fläche erstreckt, bestimmt;
ii. die Referenzachse L wird um 22,5° gedreht, wobei der Mittelpunkt der Drehung der Referenzpunkt P ist;
iii. auf der Referenzachse L wird an jeder Position eine Messprobe entnommen, sodass die eine Richtung X der Referenzachse L zur Längsrichtung der Messprobe wird;
b) der Zug-Speicher-Elastizitätsmodul in einer Atmosphäre mit einer Temperatur von 70 °C und einer Luftfeuchtigkeit von 90 % relativer Luftfeuchtigkeit wird als Durchschnittswert der 8 Messproben bestimmt, die auf folgende Weise gemessen werden:
Jede der 8 gesammelten Messproben S wird so in ein Spannfutter eingespannt, dass die Zugrichtung in der Längsrichtung der Messprobe liegt, und unter den folgenden Bedingungen in einer Reihe von Schritten platziert:
i. die Proben werden 15 Minuten lang in einer Atmosphäre mit einer Temperatur von 30 °C und einer Luftfeuchtigkeit von 30 % relativer Luftfeuchtigkeit gehalten;
ii. dann wird die Temperatur mit einer Geschwindigkeit von 5°C/Minute bei konstanter Luftfeuchtigkeit auf 70 °C erhöht;
iii. die Proben werden 10 Minuten lang in der Atmosphäre mit einer Temperatur von 70 °C und einer Luftfeuchtigkeit von 30 % relativer Luftfeuchtigkeit gehalten; und
iv. die Luftfeuchtigkeit wird bei konstanter Temperatur mit einer Erhöhungsgeschwindigkeit von 5 % relativer Luftfeuchtigkeit/Minute auf 90 % erhöht, und
v. dann werden die Proben 10 Minuten lang in einer Atmosphäre mit einer Temperatur von 70 °C und einer Luftfeuchtigkeit von 90 % relativer Luftfeuchtigkeit gehalten, um die Werte zu messen;
c) die Messung wird unter Bezugnahme auf JIS K 7244-4:1999 durch ein Zugverfahren unter Verwendung der Messvorrichtung für dynamische Viskoelastizität unter den folgenden Bedingungen durchgeführt:
i. Messprobe: quadratische Form mit 20 mm in Längsrichtung * 5 mm in der kurzen Richtung;
ii. Länge der Messprobe zwischen Spannfuttern: 15 mm
iii. Messmodus: Sinuswellen-Verzerrungszugmodus;
iv. Frequenz: 10 Hz;
v. Statische Belastung: 29,09 cN bis 93,87 cN;
vi. Höhe der Dehnung: 7,04 µm bis 7,53 µm;
vii. Statisches/dynamisches Leistungsverhältnis: 1,5;
wobei ein Eindrück-Elastizitätsmodul der zweiten Harzschicht nicht kleiner als ein Eindrück-Elastizitätsmodul der ersten Harzschicht ist;
wobei der Eindruck-Elastizitätsmodul der dritten Harzschicht nicht kleiner als der Eindrück-Elastizitätsmodul der zweiten Harzschicht ist; und
wobei ein Eindrück-Elastizitätsmodul der vierten Harzschicht nicht kleiner als das Eindrück-Elastizitätsmodul der dritten Harzschicht ist;
wobei der Eindrück-Elastizitätsmodul einer Harzschicht unter Verwendung einer Ultra-Mikrolast-Härteprüfmaschine nach dem Verfahren gemäß ISO 14577:2015 gemessen wird.

2. Äußeres Abdeckmaterial für Vakuumwärmedämmstoff nach Anspruch 1, **dadurch gekennzeichnet, dass** das Verhältnis des Zug-Speicher-Elastizitätsmoduls in einer Atmosphäre mit einer Temperatur von 70 °C und einer Luftfeuchtigkeit von 90 % relativer Luftfeuchtigkeit zu dem Zug-Speicher-Elastizitätsmodul in einer Atmosphäre mit einer Temperatur von 30 °C und einer Luftfeuchtigkeit von 90 % relativer Luftfeuchtigkeit in einem Bereich von 40 % oder mehr und 70 % oder weniger liegt.

3. Äußeres Abdeckmaterial für Vakuumwärmedämmstoff nach Anspruch 1 oder 2, **dadurch gekennzeichnet, dass** zwei der Gassperrschichten zwischen der zweiten Harzschicht und der dritten Harzschicht angeordnet sind.

4. Äußeres Abdeckmaterial für Vakuumwärmedämmstoff nach Anspruch 1 oder 2, **dadurch gekennzeichnet, dass** mindestens eine der drei Gassperrschichten eine Schicht ist, die mindestens eine M-O-P-Bindung enthält (hier steht M für ein anorganisches Atom, 0 steht für ein Sauerstoffatom und P steht für ein Phosphoratom).

5. Äußeres Abdeckmaterial für Vakuumwärmedämmstoff nach Anspruch 1 oder 2, **dadurch gekennzeichnet, dass** mindestens eine der drei Gassperrschichten eine anorganische Schicht ist.

6. Vakuumwärmedämmstoff, **dadurch gekennzeichnet, dass** er Folgendes umfasst: ein Kernmaterial und ein äußeres Abdeckmaterial für Vakuumwärmedämmstoff, welches das Kernmaterial umschließt; wobei
das äußere Abdeckmaterial für Vakuumwärmedämmstoff das äußere Abdeckmaterial für Vakuumwärmedämmstoff nach Anspruch 1 oder 2 ist.

7. Gegenstand, der mit Vakuumwärmedämmstoff bereitgestellt ist, **dadurch gekennzeichnet, dass** er Folgendes umfasst:
einen Gegenstand mit einem Wärmedämmbereich und einem Vakuumwärmedämmstoff; wobei der Vakuumwärmedämmstoff ein Kemmaterial und ein äußeres Abdeckmaterial für Vakuumwärmedämmstoff umfasst, welches das Kernmaterial umschließt; und
das äußere Abdeckmaterial für Vakuumwärmedämmstoff das äußere Abdeckmaterial für Vakuumwärmedämmstoff nach Anspruch 1 oder 2 ist.

## Revendications

1. Matériau de revêtement externe pour matériau d'isolation thermique sous vide, **caractérisé en ce qu'**il comprend :
au moins quatre couches de résine, à savoir une première couche de résine, une deuxième couche de résine, une troisième couche de résine et une quatrième couche de résine, et
au moins trois couches barrières aux gaz, et dans lequel :
la première couche de résine est un film thermosoudable ;
au moins une ou plusieurs des couches barrières aux gaz sont agencées entre la deuxième couche de résine et la troisième couche de résine ;
au moins une ou plusieurs des couches barrières aux gaz sont agencées entre la troisième couche de résine et la quatrième couche de résine ;
un module d'élasticité en traction dans une atmosphère ayant une température de 70°C et une humidité de 90 % HR est compris dans la plage de 1,0 x 10⁹ Pa ou plus à 1,5 x 10⁹ Pa ou moins, le module d'élasticité en traction étant mesuré comme décrit dans les étapes (a) à (c) ci-dessous :
a) une pièce d'essai Q de taille souhaitée est découpée à partir du matériau de revêtement externe, et 8 pièces d'échantillon S de mesure de radicaux à partir d'une pièce d'essai Q, en prenant un point de référence P comme centre, sont collectées comme suit :
i. dans une surface de la pièce d'essai Q, le point de référence P et un axe de référence L qui s'étend depuis le point de référence P en tant que point de départ vers une direction X arbitraire dans la surface, sont déterminés ;
ii. l'axe de référence L est tourné de 22.5° en prenant le point de référence P comme centre de rotation ;
iii. à chaque position sur l'axe de référence L, un échantillon de mesure est collecté de sorte que ladite une direction X de l'axe de référence L devient une direction longitudinale de l'échantillon de mesure ;
b) le module d'élasticité en traction dans l'atmosphère ayant une température de 70°C et une humidité de 90 % HR est déterminé en tant que valeur moyenne des valeurs des 8 pièces d'échantillon de mesure mesurées de la façon suivante :
chacune des 8 pièces collectées d'échantillon de mesure S sont installées dans un mandrin de sorte que la direction de traction se situe dans la direction longitudinale de l'échantillon de mesure et, dans les conditions suivantes, sont placées dans la série d'étapes :
i. maintien des échantillons dans l'atmosphère ayant une température de 30°C et une humidité de 30 % HR pendant 15 minutes ;
ii. puis augmentation de la température à 70°C à une vitesse d'augmentation de température de 5°C/min dans l'humidité constante ;
iii. maintien des échantillons dans l'atmosphère ayant la température de 70°C et l'humidité de 30 % HR pendant 10 minutes ; et,
iv. augmentation de l'humidité à 90 % à une vitesse d'augmentation d'humidité de 5 % RH/min à la température constante, et
v. puis maintien des échantillons dans l'atmosphère ayant une température de 70°C et une humidité de 90 % HR pendant 10 minutes pour mesurer les valeurs ;
c) la mesure est réalisée en référence à la norme JIS K 7244-4:1999 par un procédé de contrainte à la rupture en utilisant un dispositif de mesure de viscoélasticité dynamique dans les conditions suivantes :
i. échantillon de mesure : forme carrée de 20 mm dans la direction longitudinale x 5 mm dans la direction courte ;
ii. longueur d'échantillon de mesure entre mandrins : 15 mm
iii. mode de mesure : mode de contrainte par distorsion d'onde sine ;
iv. fréquence : 10 Hz ;
v. charge statique : 29,09 cN à 93,87 cN ;
vi. quantité de déformation : 7,04 µm à 7,53 µm ;
vii. rapport puissance statique/dynamique : 1,5 ;
un module d'élasticité par pénétration de la seconde couche de résine n'est pas inférieur à un module d'élasticité par pénétration de la première couche de résine ;
un module d'élasticité par pénétration de la troisième couche de résine n'est pas inférieur au module d'élasticité par pénétration de la deuxième couche de résine ; et
un module d'élasticité par pénétration de la quatrième couche de résine n'est pas inférieur au module d'élasticité par pénétration de la troisième couche de résine ;
dans lequel le module d'élasticité par pénétration de la couche de résine est mesuré en utilisant une machine d'essai de microdureté à faible charge par un procédé conformément à la norme ISO 14577:2015.

2. Matériau de revêtement externe pour matériau d'isolation thermique sous vide selon la revendication 1, **caractérisé en ce qu'**un rapport du module d'élasticité en traction dans l'atmosphère ayant une température de 70°C et une humidité de 90 % HR par rapport au module d'élasticité en traction dans une atmosphère ayant une température de 30°C et une humidité de 90 % HR, se situe dans la plage de 40 % ou plus à 70 % ou moins.

3. Matériau de revêtement externe pour matériau d'isolation thermique sous vide selon la revendication 1 ou 2, **caractérisé en ce que** deux des couches barrières aux gaz sont agencées entre la deuxième couche de résine et la troisième couche de résine.

4. Matériau de revêtement externe pour matériau d'isolation thermique sous vide selon la revendication 1 ou 2, **caractérisé en ce qu'**au moins une couche barrière aux gaz sur trois est une couche qui contient au moins une liaison M-O-P (dans le présent mémoire, M représente un atome inorganique, O représente un atome d'oxygène et P représente un atome de phosphore).

5. Matériau de revêtement externe pour matériau d'isolation thermique sous vide selon la revendication 1 ou 2, **caractérisé en ce qu'**au moins une couche barrière aux gaz sur trois est une couche inorganique.

6. Matériau d'isolation thermique sous vide **caractérisé en ce qu'**il comprend : un matériau d'âme, et un matériau de revêtement externe pour matériau d'isolation thermique sous vide entourant le matériau d'âme ; dans lequel
le matériau de revêtement externe pour matériau d'isolation thermique sous vide est le matériau de revêtement externe pour matériau d'isolation thermique sous vide selon la revendication 1 ou 2.

7. Article pourvu d'un matériau d'isolation thermique sous vide, **caractérisé en ce qu'**il comprend : un article comprenant une région d'isolation thermique, et un matériau d'isolation thermique sous vide ; dans lequel
le matériau d'isolation thermique sous vide comprend un matériau d'âme, et un matériau de revêtement externe pour matériau d'isolation thermique sous vide entourant le matériau d'âme ; et
le matériau de revêtement externe pour matériau d'isolation thermique sous vide est le matériau de revêtement externe pour matériau d'isolation thermique sous vide selon la revendication 1 ou 2.
